# EUROPEAN PATENT APPLICATION

(11) **EP 4 604 670 A1**
(43) Date of publication of application: **20.08.2025**
(21) Application number: 23877091.1
(22) Date of filing: 19.09.2023
(51) Int. Cl.: H04W 88/02, H04W 16/28, H04W 72/0457

(54) **TERMINAL, BASE STATION, AND COMMUNICATION METHOD**

(30) Priority: 14.10.2022 JP 2022165894
(71) Applicant: NTT DOCOMO, INC., Tokyo 100-6150 (JP)
(72) Inventor: HARADA, Hiroki, Tokyo 100-6150 (JP); SHIBAIKE, Naoya, Tokyo 100-6150 (JP)
(74) Representative: Hoffmann Eitle
(86) International application number: PCT/JP2023/033889
(87) International publication number: WO 2024/080085

(57) **Abstract**

A terminal includes: a reception unit configured to receive, from a base station, a specific parameter indicated by an RRC message, in a transmission switching scheme in which at least one antenna port of a plurality of antenna ports can switch bands across two or more bands and the plurality of antenna ports in total switch bands for transmission across three or more bands; and a control unit configured to assume presence or absence of configuration of UL MIMO of up to two ports in a band in which transmission switching is configured, based on whether the reception unit receives the specific parameter or not.

## Description

### Technical Field

The present invention relates to a terminal, a base station, and a communication method in a radio communication system.

### Background Art

In New Radio (NR) (also referred to as "5G") which is a successor system of long term evolution (LTE), techniques for satisfying requirements such as a large-capacity system, a high-speed data transmission rate, low delay, simultaneous connection of a large number of terminals, low cost, and power saving have been studied (refer to Non-Patent Document 1, for example).

Furthermore, 6G has been studied as a nextgeneration radio communication system of 5G, and realization of radio qualities exceeding 5G is expected. For example, in 6G, studies are being conducted to realize further increases in capacities, use of new frequencies, further reductions in delays, further increases in reliability, further reductions in power consumption, and expansion of coverage in new regions (high-altitudes, sea, and outer space) by non-terrestrial networks.

### Related Art Document

### Non-Patent Document

Non-Patent Document 1: 3GPP TS 38.300 V16. 8.0 (2021 -12)

### SUMMARY OF THE INVENTION

### Problems to be Solved by the Invention

Studies are being conducted to enhance uplink transmission in multi-carrier. For example, an operation is being studied in which a terminal that supports up to two simultaneous transmissions dynamically switches bands for uplink transmission across three or four bands. However, there is no clear existing technology related to capability information and configuration information for realizing the operation. Therefore, there is a possibility that bands of uplink transmission cannot be appropriately switched.

The present invention has been made in view of the above, and it is therefore an object of the present invention to provide a technique that enables appropriate switching of a band used for uplink transmission in a radio communication system.

### Means for Solving the Problems

According to the disclosed technology, there is provided a terminal comprising:
a reception unit configured to receive, from a base station, a specific parameter indicated by an RRC message, in a transmission switching scheme in which at least one antenna port of a plurality of antenna ports can switch bands across two or more bands and the plurality of antenna ports in total switch bands for transmission across three or more bands; and
a control unit configured to assume presence or absence of configuration of UL MIMO of up to two ports in a band in which transmission switching is configured based on whether the reception unit receives the specific parameter or not.

### Effects of the Invention

According to the disclosed technology, a technique that enables appropriate switching of a band used for uplink transmission is provided in a radio communication system.

### Brief Description of the Drawings

[Fig. 1] FIG. 1 is a diagram for explaining a radio communication system according to an embodiment of the present invention;
[Fig. 2] FIG. 2 is a diagram for explaining a radio communication system according to an embodiment of the present invention;
[Fig. 3] FIG. 3 is a diagram showing a case 1 and a case 2 in UL Tx switching;
[Fig. 4] FIG. 4 is a diagram showing a configuration example of antenna ports used for transmission for each case in UL Tx switching.
[Fig. 5] FIG. 5 is a diagram showing a configuration example of antenna ports used for transmission and reception in each case in UL Tx switching.
[Fig. 6] FIG. 6 is a diagram showing an example of UE capability;
[Fig. 7] FIG. 7 is a diagram showing an example of RRC configuration;
[Fig. 8] FIG. 8 is a diagram showing an example of a switching period;
[Fig. 9] FIG. 9 is a diagram showing an example of a switching period;
[Fig. 10] FIG. 10 is a diagram showing an example of the length of Dl interruption;
[Fig. 11] FIG. 11 is a diagram showing cases 1 to 3 in UL Tx switching;
[Fig. 12] FIG. 12 is a diagram showing a configuration example of antenna ports used for transmission for each case in UL Tx switching;
[Fig. 13] FIG. 13 is a diagram showing an example of RRC configuration;
[Fig. 14] FIG. 14 is a diagram showing an example of a case where a plurality of carriers are included in one band in UL Tx switching;
[Fig. 15] FIG. 15 is a diagram showing a configuration example of antenna ports used for transmission for each case in UL Tx switching;
[Fig. 16] FIG. 16 is a diagram showing a configuration example of antenna ports used for transmission for each case in UL Tx switching;
[Fig. 17] FIG. 17 is a diagram showing an example of a configuration in the case of switching across four bands;
[Fig. 18] FIG. 18 is a diagram showing a configuration example of antenna ports used for transmission when switching is performed across four bands;
[Fig. 19] FIG. 19 is a diagram showing an example of basic operation of the embodiment;
[Fig. 20] FIG. 20 is a diagram showing a configuration example of a base station 10;
[Fig. 21] FIG. 21 is a diagram showing a configuration example of a terminal 20;
[Fig. 22] FIG. 22 is a diagram showing an example of a hardware configuration of the base station 10 or the terminal 20 according to the embodiment of the present invention; and
[Fig. 23] FIG. 23 is a diagram showing a configuration example of a vehicle.

### Detailed Description of the Invention

Hereinafter, an embodiment of the present invention will be described with reference to the drawings. The embodiment described below is an example, and the embodiment to which the present invention is applied is not limited to the following embodiment.

In the operation of the radio communication system according to the embodiment of the present invention, existing techniques are used as appropriate. The existing technology is, for example, existing LTE or existing NR, but is not limited to existing LTE and NR.

In addition, in the embodiments of the present invention described below, terms such as a synchronization signal (SS), a primary SS (PSS), a secondary SS (SSS), a physical broadcast channel (PBCH), a physical random access channel (PRACH), a physical downlink control channel (PDCCH), a physical downlink shared channel (PDSCH), a physical uplink control channel (PUCCH), and a physical uplink shared channel (PUSCH) used in the existing LTE or NR are used. This is for convenience of description, and signals, functions, and the like similar to these may be referred to by other names. The above-mentioned terms in NR correspond to NR-SS, NR-PSS, NR-SSS, NR-PBCH, NR-PRACH and the like. However, even a signal used for NR is not necessarily specified as "NR -".

In the embodiments of the present invention, the duplex scheme may be a time division duplex (TDD) scheme, a frequency division duplex (FDD) scheme, or another scheme (for example, flexible duplex).

In the embodiments of the present invention, a radio parameter or the like being "configured" may mean that a predetermined value is pre-configured or that a radio parameter notified from the base station 10 or the terminal 20 is configured.

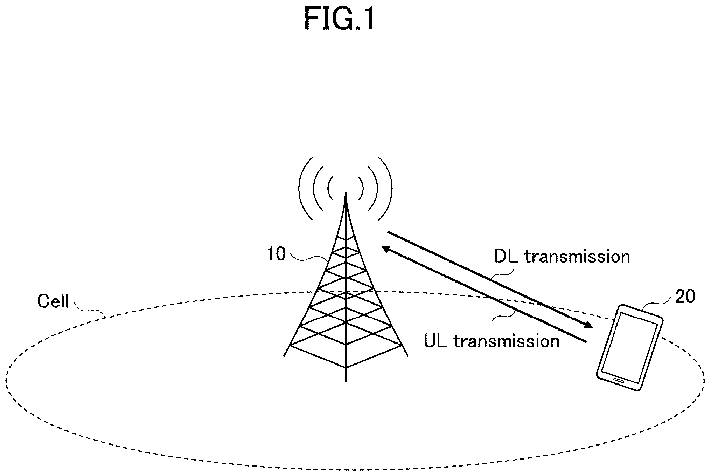

FIG. 1 is a diagram showing a configuration example (1) of a radio communication system according to an embodiment of the present invention. As shown in FIG. 1, the radio communication system according to the embodiment of the present invention includes a base station 10 and a terminal 20. Although one base station 10 and one terminal 20 are illustrated in FIG. 1, this is merely an example, and a plurality of base stations 10 and a plurality of terminals 20 may be provided.

The base station 10 is a communication apparatus that provides one or more cells and performs radio communication with the terminal 20. The physical resource of the radio signal is defined in a time domain and a frequency domain, and the time domain is defined by orthogonal frequency division multiplexing (OFDM). The frequency domain may be defined by the number of symbols, or the frequency domain may be defined by the number of subcarriers or the number of resource blocks. The base station 10 transmits a synchronization signal and system information to the terminal 20. The synchronization signal is, for example, NR-PSS and NR-SSS. The system information is transmitted by, for example, NR-PBCH and is also referred to as broadcast information. The synchronization signal and the system information may be referred to as an SSB (SS/PBCH block). As illustrated in FIG. 1, the base station 10 transmits a control signal or data to the terminal 20 in downlink (DL), and receives a control signal or data from the terminal 20 in uplink (UL). Both the base station 10 and the terminal 20 can transmit and receive signals by performing beamforming. In addition, both the base station 10 and the terminal 20 can apply communication by multiple input multiple output (MIMO) to DL or UL. Both the base station 10 and the terminal 20 may perform communication via a secondary cell (SCell) and a primary cell (PCell) by carrier aggregation (CA). Furthermore, the terminal 20 may perform communication via a primary cell of the base station 10 and a primary secondary cell group cell (PSCell: Primary SCG Cell) of another base station 10 by dual connectivity (DC).

The terminal 20 is a communication apparatus having a radio communication function, such as a smartphone, a mobile phone, a tablet, a wearable terminal, and a machine-to-machine (M2M) communication module. As illustrated in FIG. 1, the terminal 20 receives a control signal or data from the base station 10 in DL and transmits a control signal or data to the base station 10 in UL, thereby using various communication services provided by the radio communication system. The terminal 20 receives various reference signals transmitted from the base station 10 and measures the channel quality based on the reception result of the reference signal.

The terminal 20 can perform carrier aggregation in which a plurality of cells (a plurality of component carriers (CCs)) are aggregated to perform communication with the base station 10. In carrier aggregation, one PCell (Primary cell) and one or more SCells (Secondary cell) are used. Also, a PUCCH-SCell with a PUCCH may be used.

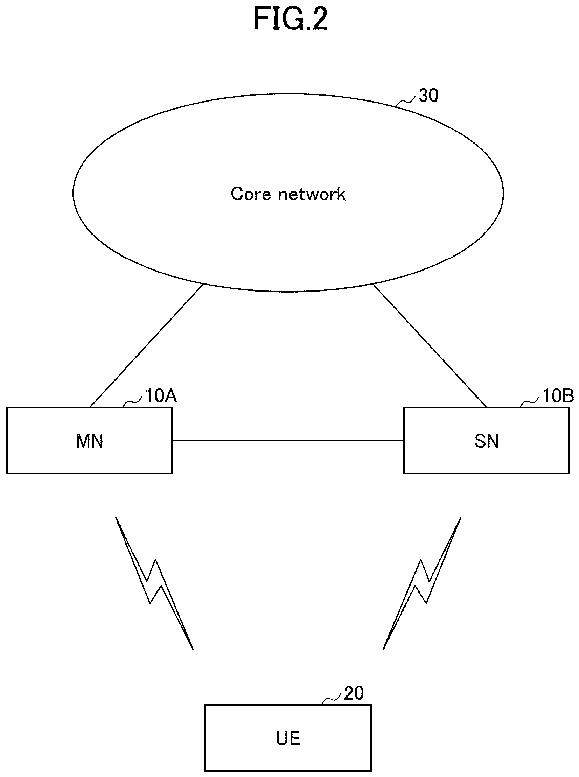

FIG. 2 is a diagram for explaining an example (2) of the radio communication system according to the embodiment of the present invention. FIG. 2 illustrates a configuration example of a radio communication system in a case where dual connectivity (DC) is executed. As shown in FIG. 2, the base stations 10A and 10B are provided as a master node (MN) and a secondary node (SN), respectively. The base stations 10A and 10B are connected to a core network. The terminal 20 can communicate with both the base stations 10A and 10B.

A cell group provided by the base station 10A serving as the MN is referred to as a master cell group (MCG), and a cell group provided by the base station 10B serving as the SN is referred to as a secondary cell group (SCG). In DC, the MCG is formed with one PCell and one or more SCells, and the SCG is formed with one PSCell (Primary SCG Cell) and one or more SCells.

The processing operation in the present embodiment may be executed by the system configuration shown in FIG. 1, the system configuration shown in FIG. 2, or other system configurations.

In 3GPP, studies are being conducted to enhance operation in multi-carrier. To be more specific, an operation is under study whereby a terminal that supports up to two simultaneous transmissions in FR1 (Frequency Range 1) dynamically switches bands for UL transmission across three or four bands. In the following description, "carrier", "CC" and "cell" may be used synonymously.

### (Problem)

In the related art (Rel-16 and Rel-17), the terminal 20 supports an UL Tx switching function (Uplink transmission switching function) that is a function enabling UL transmission switching between two bands (two carriers). Even the terminal 20 having only two transmission chains (Tx Chains) can perform operations such as transmission using two antenna ports in one carrier and transmission using one antenna port in one carrier and another antenna port in another carrier by switching the operations according to time by using the UL Tx switching function.

The transmission chain (Tx Chain) is a physical function for transmission in the terminal 20 regardless of whether or not actual transmission is performed. Transmission can be performed on one carrier by one transmission chain. By switching the carrier (a transmission function unit corresponding to the carrier) used by the transmission chain, the carrier that can be transmitted by the transmission chain can be switched.

The antenna port is an antenna that can actually perform transmission using a transmission chain (Tx Chain). The transmit chain and the antenna port may be used interchangeably. The "antenna port" may be referred to as a "port".

In the following description, unless otherwise specified, one band has one carrier. Therefore, in the present specification and claims, the "band" may be replaced with the "carrier", and the "carrier" may be replaced with the "band". However, one band having one carrier is an example, and one band may have a plurality of carriers. When a plurality of carriers are included in one band, the number or relationship of the carriers may be limited, for example, up to two carriers that are consecutive in frequency. A plurality of carriers in one band may be treated similarly to one UL band (carrier) in the following description.

In 3GPP, "UL Tx switching schemes across up to 3 or 4 bands with restriction of up to 2 Tx simultaneous transmission for FR1 UEs " (a feature whereby a terminal that supports up to two transmissions at the same time in FR1 dynamically switch the band in which UL is transmitted across 3 or 4 bands) is under study. For convenience, this function may be referred to as "Rel-18 UL Tx switching".

The above-described function is a function of configuring 3 or 4 UL bands (carriers) for a terminal that cannot perform UL CA (Carrier Aggregation) or can perform UL CA only up to two UL CA, and enabling the base station 10 to dynamically instruct the terminal to perform transmission in one or two UL bands (carriers).

With such a function, it is possible to instruct the terminal 20 to perform UL transmission using an UL band (carrier) suitable for use in each time resource in consideration of a traffic situation or a TDD configuration between a plurality of UL bands (carriers). This improves the frequency utilization efficiency and UL throughput.

In Rel-16 and Rel-17, UL Tx switching between two bands is specified as a technical specification. However, in Rel-18 UL Tx switching, it is not clear how to configure an UL band (carrier) that is a switching candidate in the terminal 20.

Conventionally, a plurality of DL/UL carriers are configured as serving cells in the terminal 20 supporting UL CA, the number of DL/UL carriers being equal to or less than the number of CCs of UL CA supported by the terminal 20, and among the DL/UL carriers, an UL CC to be used for transmission can be dynamically indicated. However, in Rel-18 UL Tx switching, it is necessary to configure a larger number of UL carriers than the number of CCs of UL CA supported in UL CA. However, in the related art, it is not assumed that the number of UL CCs is configured to be equal to or greater than the number of supported CCs.

Another existing technology is supplemental uplink (SUL). In the framework of SUL, association with a normal uplink (NUL) and dynamic switching are supported, but it is not assumed that the framework of the SUL is extended.

In the following, first, for each Rel-16 and R-17, UL Tx switching will be described. Subsequently, capability and configuration information proposed for Rel-18 UL Tx switching will be described. However, contents of capability and configuration information defined for UL Tx switching of Rel-16 and R-17 may be applied to Rel-18 UL Tx switching.

Further, regarding power boosting, switching period (switching time), DL interruption (downlink communication interruption), and the like, which are described for UL Tx switching of each of Rel-16 and R-17, the operations of these themselves are basically the same as those of Rel-16 and R-17 also in Rel-18 UL Tx switching.

### (UL Tx switching of Rel-16)

In Rel-16, the terminal 20 supports two carriers and has two transmission chains. One transmission chain is fixed to one carrier, while the other transmission chain can be associated with either of the two carriers by a switch. Therefore, for example, simultaneous transmission by two antenna ports can be performed by one carrier. Each antenna port can also perform transmission with one carrier and one antenna port. These schemes can be dynamically switched. Rel-16 UL Tx switching is referred to as Rel-16 1Tx-2Tx switching.

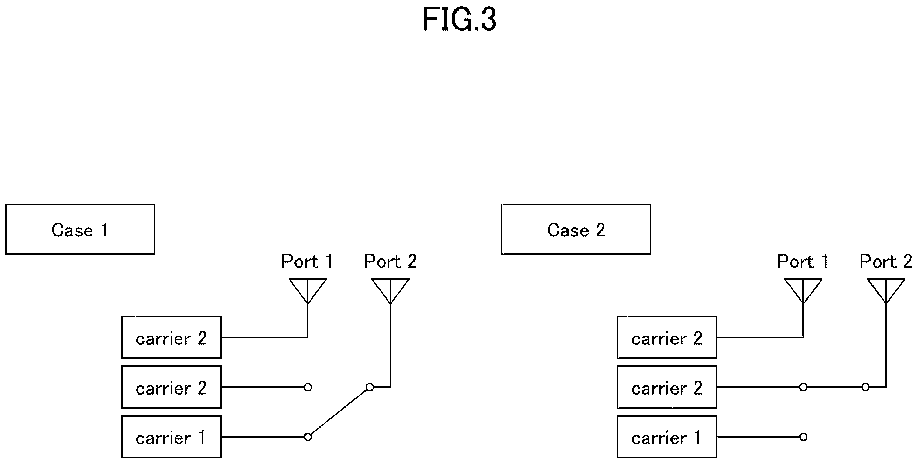

As shown in FIG. 3, a configuration in which each transmission chain is associated with one carrier is referred to as case 1, and a configuration in which two transmission chains are associated with one carrier is referred to as case 2.

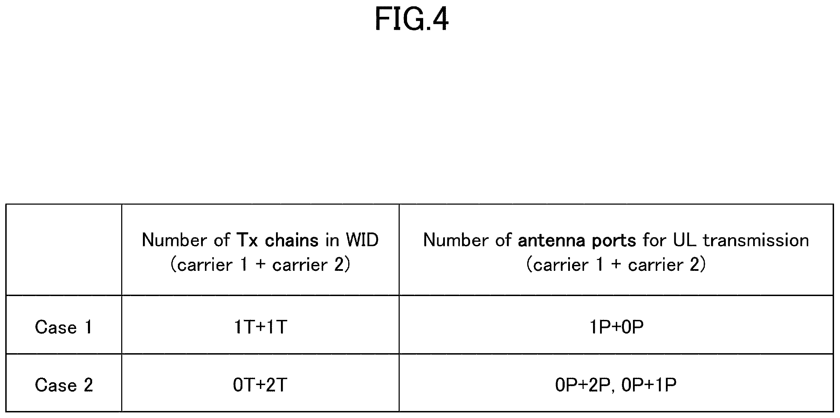

FIG. 4 shows the configuration of the transmission chain used for transmission in each of case 1 and case 2 in SUL. For example, 1T+1T, which is case 1, means that, in the example of FIG. 3, carrier 2 is connected transmission chain 1 and carrier 1 is connected to transmission chain 2.

Further, 1P+0P in the state of 1T+1T means that transmission is performed by the antenna port 2 using the carrier 1, but transmission is not performed by the antenna port 1. In SUL, since two carriers cannot be simultaneously set, 1P+1P does not exist. In SUL, in case 1, since transmission of only NUL (carrier 2) is not assumed, 0P+1P does not exist.

In addition, "0P+2P, 0P+1P" in case 2 means that transmission using the carrier 2 is performed by the antenna port 1 and the antenna port 2, or transmission using the carrier 2 is performed only by the antenna port 1.

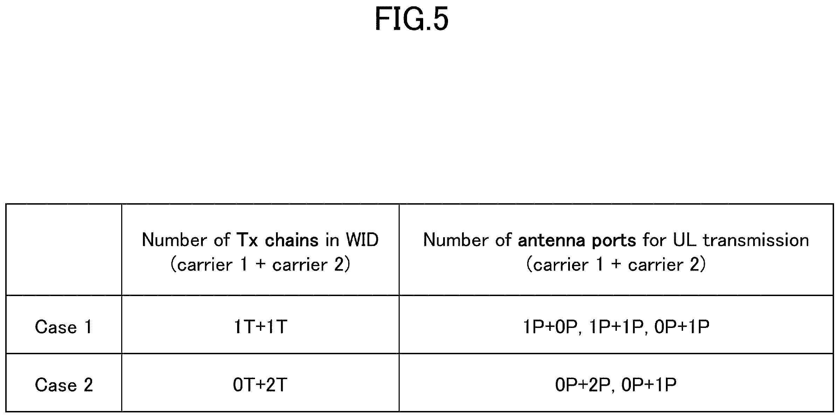

In Rel-16 1Tx-2Tx-switching in inter-band CA/EN-DC, there are option 1 in which two carriers cannot be used simultaneously and option 2 in which two carriers can be used simultaneously. The transmit chain configuration used for transmission in option 1 is the same as that shown in FIG. 4. The transmission chain configuration used for transmission in option 2 is as shown in FIG. 5.

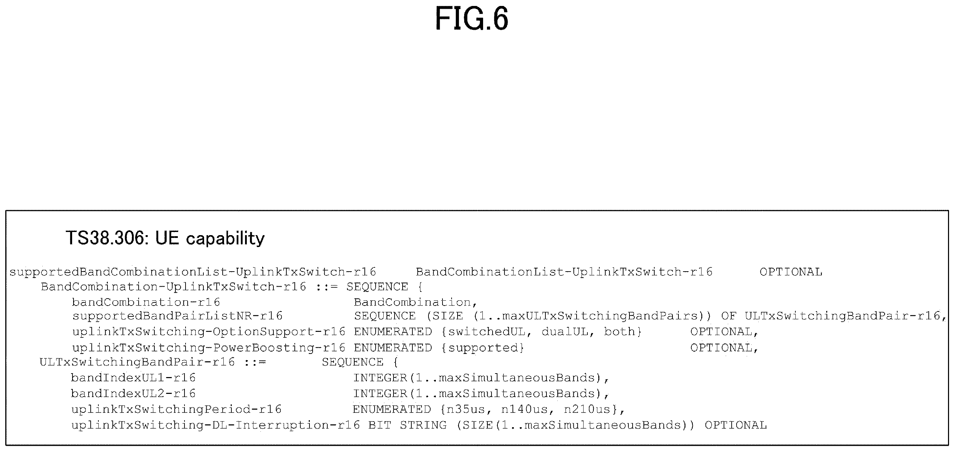

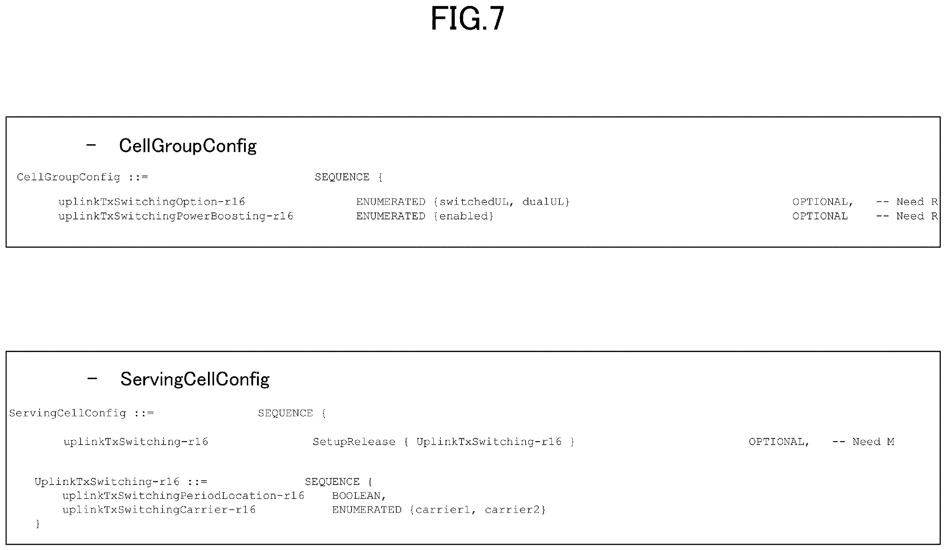

FIG. 6 illustrates an example of a UE capability that is reported from the terminal 20 to the base station 10 and that is defined in correspondence with Rel-16 1Tx-2Tx switching. FIG. 7 illustrates an example of CellGroupConfig and ServingCellConfig configured in the terminal 20 by the base station 10, which are defined in correspondence with Rel-16 1Tx-2Tx switching.

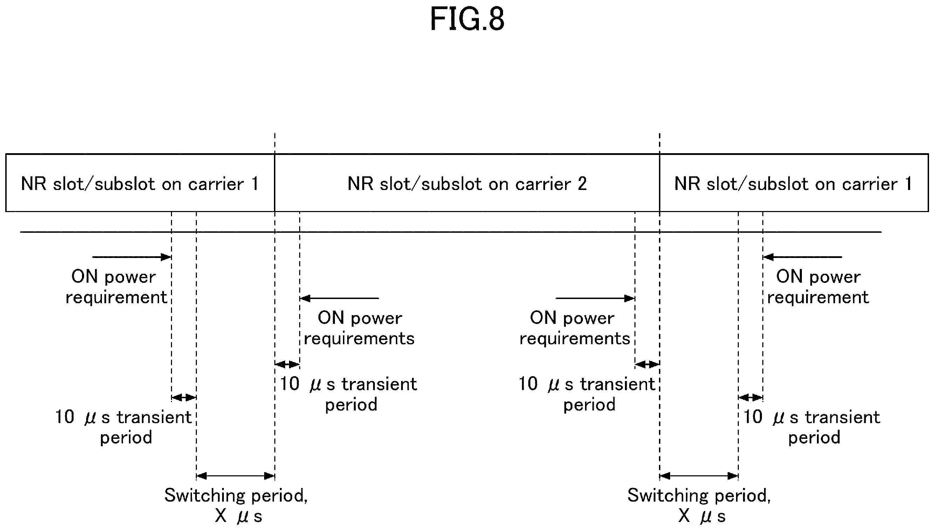

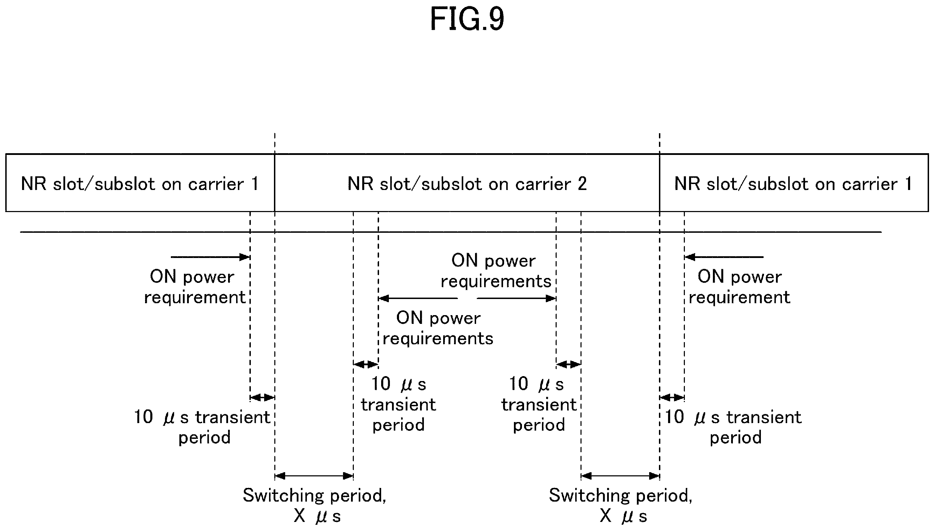

The uplinkTxSwitchingPeriodLocation-r16 in the ServingCellConfig indicates whether or not UL Tx switching period is configured in a target cell (carrier). An operation example for the UL Tx switching period is illustrated in FIGs. 8 and 9. Fig. 8 shows an example of a case where occurrence of an UL Tx switching period is configured in the carrier 1. In this case, in both cases of switching from the carrier 1 to the carrier 2 and switching from the carrier 2 to the carrier 1, an UL Tx switching period occurs in the carrier 1. For example, in the case of FIG. 8, when an instruction to switch to the carrier 2 is received while transmission is performed by the carrier 1, transmission is performed by the carrier 2 after a switching time (switching period) in the carrier 1. FIG. 9 illustrates an example of a case where occurrence of an UL Tx switching period is configured in the carrier 2.

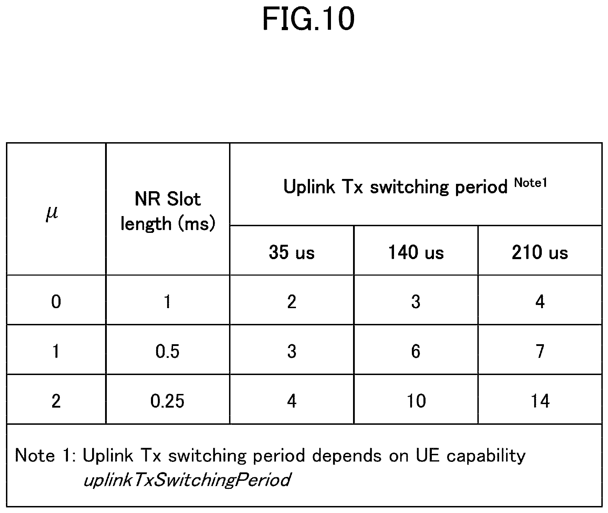

When dynamic switching between two carriers is performed, the terminal 20 is allowed to perform DL interruption of a predetermined length in a portion overlapping with the UL switching period in a DL carrier. The length (X OFDM symbols) is defined as shown in FIG. 10.

The UL Tx switching of Rel-16 is summarized as follows. The terminal 20 can dynamically switch between "one port transmission by carrier 1", "one port transmission by carrier 2", "one port transmission by carrier 1 + one port transmission by carrier 2" (applicable only when Option 2 is supported in inter-band CA), and "two port transmission by carrier 2 (with or without 3dB power boosting)" based on PUSCH scheduling (scheduling command, rank adaptation) from the base station 10.

A switching period occurs when a carrier connected to a transmission port is switched, and UL transmission is not performed in either of both carriers during the switching period. In addition, there is a case where DL interruption occurs during the switching period.

### <Rel-17>

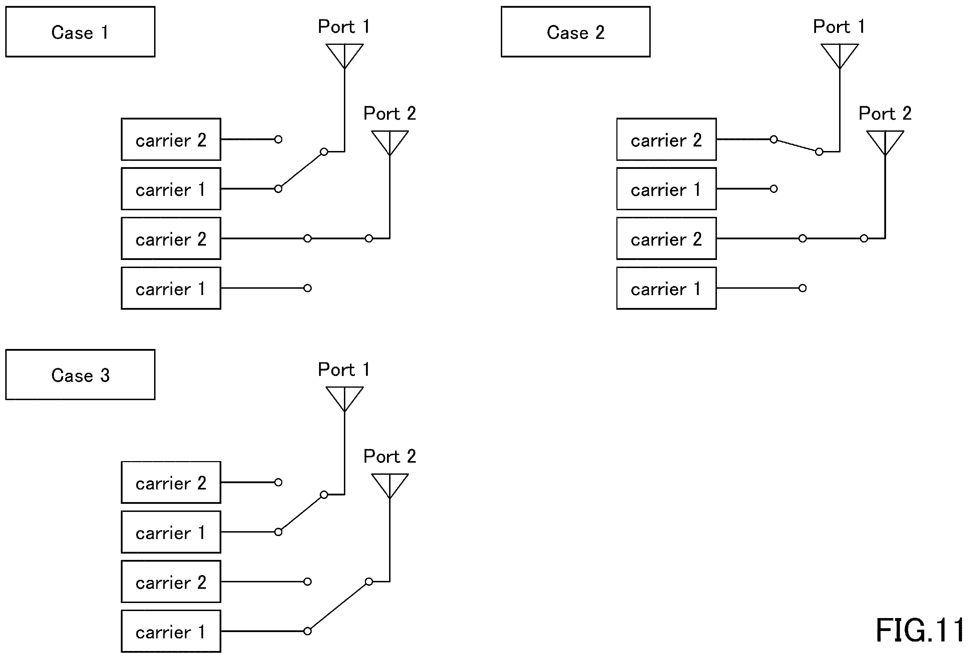

Next, Rel-17 will be described. In Rel-17, since each of two transmission chains can support two carriers, 2Tx-2Tx UL Tx switching is performed. Since the carrier 1 can also perform two port transmission, as compared with Rel-16, case 3 is added to the case 1 and the case 2 as a case of a connection pattern between a transmission chain and a carrier as illustrated in FIG. 11. Therefore, the terminal 20 and the base station 10 need to distinguish between Rel-17 (2Tx-2Tx UL Tx switching) and Rel-16 (1Tx-2Tx) .

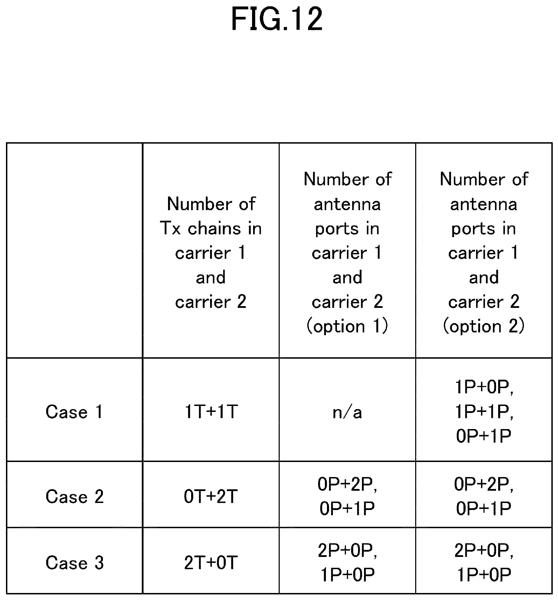

In Rel-17 (2Tx-2Tx UL Tx switching), patterns of the number of transmission ports in each case are as shown in FIG. 12. FIG. 12 shows patterns of the number of transmission ports for each case and each option (whether or not two carrier simultaneous transmission is possible).

For example, when 1P+0P is instructed in the state of case 2 or when 0P+1P is instructed in the state of case 3, for the terminal 20 that performs UL CA option 2, the terminal 20 needs to determine which of the remaining two cases to switch to.

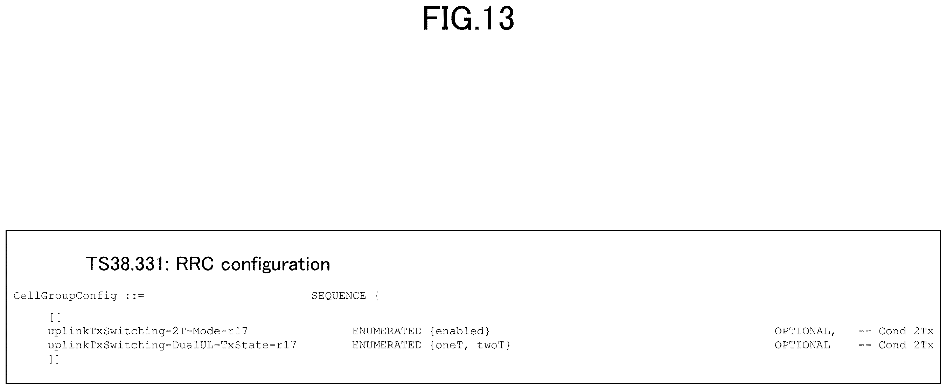

FIG. 13 shows an example of RRC configuration in Rel-17. In FIG. 13, uplinkTxSwitching-2T-Mode-r17 indicates a configuration for entering a mode of 2Tx-2Tx UL Tx switching, and uplinkTxSwitching-DualUL-TxState-r17 is information for configuring a case to switch to when there are a plurality of candidates of cases to switch to at the time of switching, as described above.

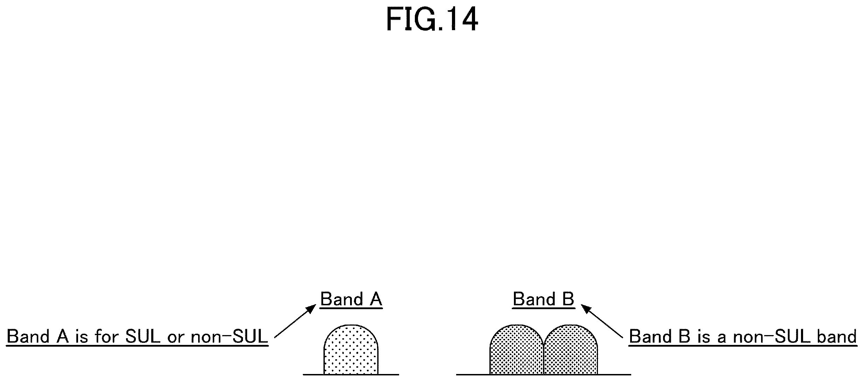

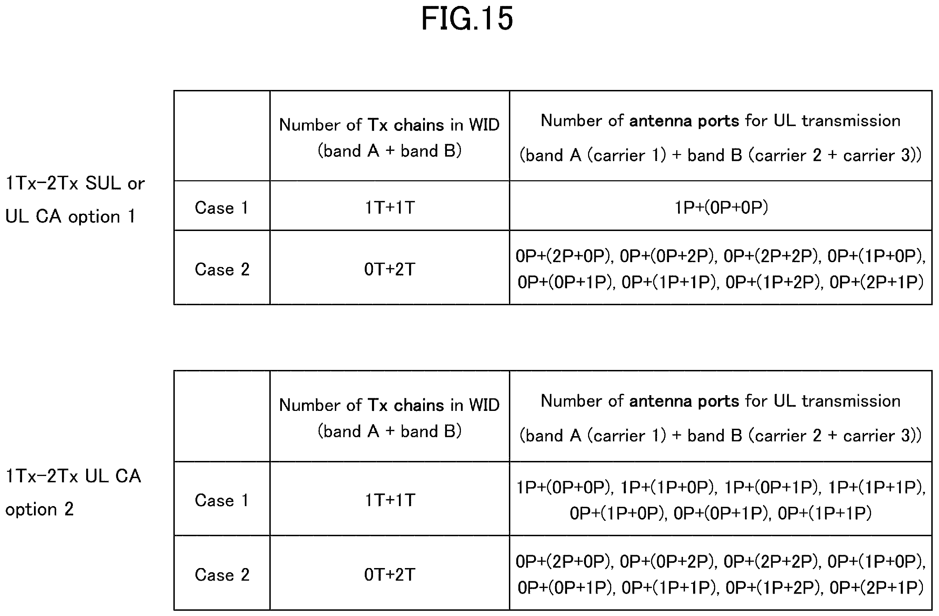

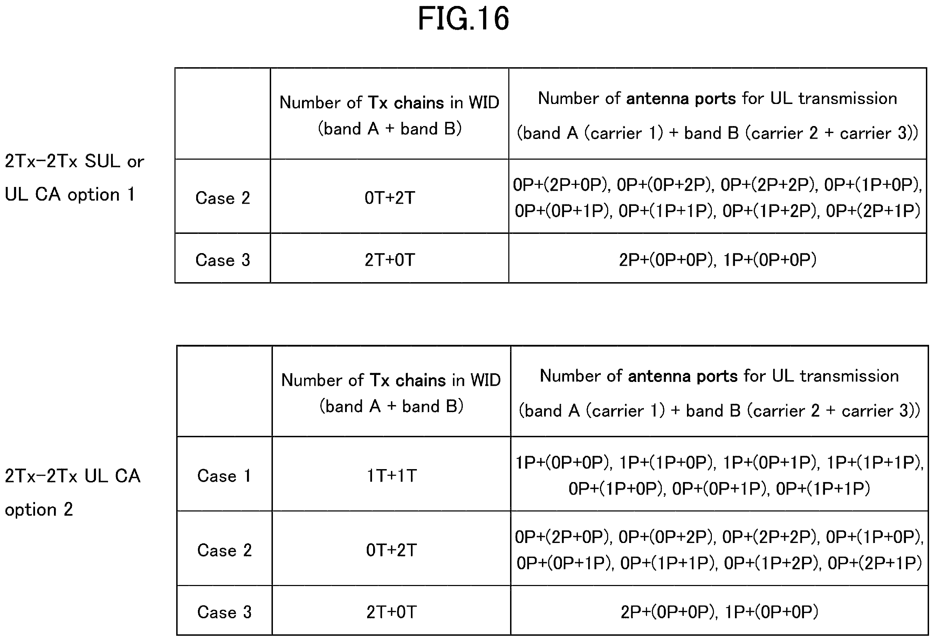

Further, in UL Tx switching of Rel-17, as shown in FIG. 14, the number of bands is two, and the use of two contiguous carriers in one of the bands is supported. FIGs. 15 and 16 show configuration examples of transmission ports in each case in the example of FIG. 14.

Functions, setting values, defined values, and the like of Rel-16 and R-17 described above may be applied to Rel-18 UL Tx switching.

### (Rel-18 UL Tx switching)

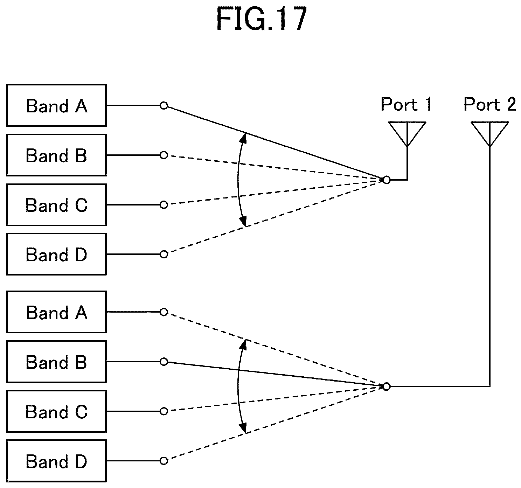

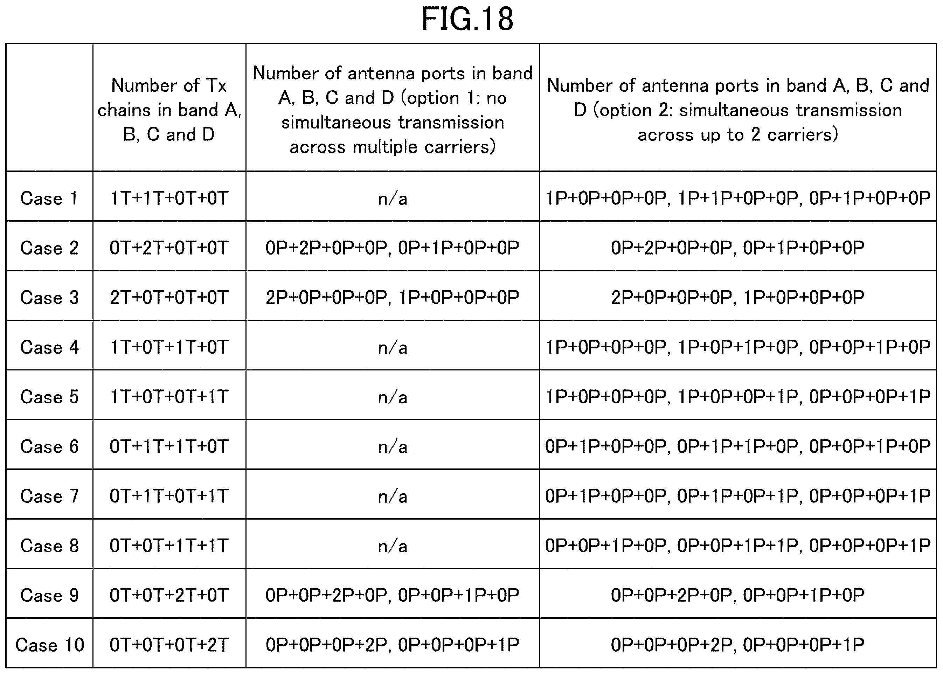

FIGs. 17 and 18 show cases assumed in Rel-18 UL Tx switching and configurations of ports for performing transmission in each case. Here, as an example, four bands A to D are used as bands that can be used for UL Tx switching.

As illustrated in FIG. 17, there are two Tx Chains (two antenna ports), and each of the Tx Chains can be switched to any one of the bands A to D. This is referred to as "2Tx-2Tx(-2Tx-2Tx) switching". Assuming that one carrier can be used in each band, the number of cases is 10 at the maximum as illustrated in FIG. 18 (assuming CA option 2).

In addition to the above assumption, a case of 1Tx-2Tx (-1Tx-1Tx) switching in which bands (carriers) that can be used by one port are fixed is also considered.

Further, as shown in FIG. 14, a case where two contiguous carriers exist in a part of bands (a case where the total number of carriers is five or more) is also considered.

Regarding the Rel-18 UL Tx switching in which the above assumption is made, since there is no related art regarding contents of a capability report from the terminal 20 to the base station 10 and a configuration/instruction from the base station 10 to the terminal 20, there is a possibility that the related art cannot appropriately perform " UL Tx switching schemes across up to 3 or 4 bands with restriction of up to 2 Tx simultaneous transmission ".

Therefore, in the present embodiment, a capability report and a configuration/instruction that enable "UL Tx switching schemes across up to 3 or 4 bands with restriction of up to 2 Tx simultaneous transmission" to be appropriately performed will be described.

Note that, although "UL Tx switching schemes across up to 3 or 4 bands with restriction of up to 2 Tx simultaneous transmission" is assumed in the present embodiment, this is merely an example. The maximum number of bands that is a range for performing transmission switching may be greater than four. The number of antenna ports used for transmission may be greater than two. That is, there may be a case where simultaneous transmission occurs in three or more antenna ports.

The term "UL Tx switching schemes across up to 3 or 4" may also be referred to as "Rel-18 UL Tx switching for 3 or 4 bands."

### (Regarding UL MIMO support, etc.)

Regarding "UL MIMO support and configuration for UL Tx switching," bands in which the terminal 20 supports UL MIMO (up to 2 ports UL) may be a part of bands subject to UL Tx switching. This point is described in the embodiments discussed later. The outline of this is, for example, "The terminal 20 may report to the base station 10 the number of supported ports in each band within a BC (band combination) (e.g., A=2, B=2, C=1, D=1, etc.)."

As for UE capability related to UL MIMO support, the conventional Rel-16/17 TS38.306 UE capability includes the following description.

### "ULTxSwitchingBandPair-r16, ULTxSwitchingBandPair-v1700

Indicates UE supports dynamic UL 1Tx-2Tx switching in case of inter-band CA, SUL, and (NG)EN-DC, and UL 2Tx-2Tx switching in case of inter-band CA and SUL as defined in TS 38.214 [12], TS 38.101-1 [2] and TS 38.101-3 [4]. The capability signaling comprises of the following parameters:
- bandIndexUL1-r16 and bandIndexUL2-r16 indicate the band pair on which UE supports dynamic UL Tx switching. bandindexUL1/bandindexUL2 xx refers to the xxth band entry in the band combination. UE shall indicate support for 2-layer UL MIMO capabilities on one of the indicated two bands in each FeatureSet entry supporting UL 1Tx-2Tx switching and indicate support for 2-layer UL MIMO capabilities on both bands in each FeatureSet entry supporting UL 2T-2Tx switching, and only the band where UE supports 2-layer UL MIMO capability can work as carrier2 as defined in TS 38.101-1 [2] and TS 38.101-3 [4]."

As described above, for 1Tx-2Tx switching across two bands, the terminal 20 is required to always notify the base station 10 of support for 2-layer UL MIMO in one of the band pairs reported as ULTxSwitchingBandPair in supportedBandPairListNR-r16.

Additionally, for 2Tx-2Tx switching across two bands, the terminal 20 is required to notify support for 2-layer UL MIMO in both bands.

Furthermore, as described in the following description of the technical specification (TS 38.331) related to uplinkTxSwitching-2T-Mode, if the terminal 20 supports both 1Tx-2Tx switching and 2Tx-2Tx switching for a certain band pair, the base station 10 configures which mode to use in the terminal 20. In other words, whether 2T-mode is configured (enabled) in CellGroupConfig determines the mode configuration. If uplinkTxSwitching-2T-Mode (which may be referred to as 2T-mode) is configured, then it is 2Tx-2Tx switching. If the uplinkTxSwitching-2T-Mode field is absent, then it is 1Tx-2Tx UL Tx switching.

### "CellGroupConfig ::= SEQUENCE {uplinkTxSwitching-2T-Mode-r17 ENUMERATED {enabled} OPTIONAL, -- Cond 2T"

### "uplinkTxSwitching-2T-Mode

Indicates 2Tx-2Tx switching mode is configured for inter-band UL CA or SUL, in which the switching gap duration for a triggered uplink switching (as specified in TS 38.214 [19]) is equal to the switching time capability value reported for the switching mode.

If this field is absent and uplinkTxSwitching is configured, it is interpreted that 1Tx-2Tx UL Tx switching is configured as specified in TS 38.214 [19]. In this case, there is one uplink (or one uplink band in case of intra-band) configured with uplinkTxSwitching, on which the maximum number of antenna ports among all configured P-SRS/A-SRS and activated SP-SRS resources should be 1 and non-codebook based UL MIMO is not configured."

Additionally, as described in the following description of the technical specification (TS 38.331) related to maxMIMO-Layers, the base station 10 configures the maximum number of UL MIMO layers per serving cell for the terminal 20.

### "PUSCH-ServingCellConfig ::= SEQUENCE {maxMIMO-Layers INTEGER (1..4) OPTIONAL,Need M"

### "maxMIMO-Layers

Indicates the maximum MIMO layer to be used for PUSCH in all BWPs of the corresponding UL of this serving cell (see TS 38.212 [17], clause 5.4.2.1). If present, the network sets maxRank to the same value. The field maxMIMO-Layers refers to DCI format 0_1."

The issue related to the conventional technical specifications described above is as follows.

As mentioned above, for two bands, the terminal 20 distinguishes whether the switching mode is 1Tx-2Tx or 2Tx-2Tx based on whether the 2T mode is configured. If the switching mode is 1Tx-2Tx, the terminal 20 assumes that transmission is possible with up to 2 ports on only one band. If the switching mode is 2Tx-2Tx, terminal 20 assumes that transmission is possible with up to 2 ports on both bands.

For three bands, if support for 2 ports is made flexible per band, the following switching mode combinations are possible. In this case, merely determining whether 2T mode is configured is insufficient to distinguish which switching mode is assumed.

### "1Tx-1Tx-1Tx, 1Tx-1Tx-2Tx, 1Tx-2Tx-2Tx, 2Tx-2Tx-2Tx"

For four bands, the combinations increase further as follows.

### "1Tx-1Tx-1Tx-1Tx, 1Tx-1Tx-1Tx-2Tx, 1Tx-1Tx-2Tx-2Tx, 1Tx-2Tx-2Tx-2Tx, 2Tx-2Tx-2Tx-2Tx"

The following embodiments will be described, and as an embodiment related to a solution to the issue of increasing combinations, Example 10 of the second embodiment will be explained.

### (Outline of Embodiment)

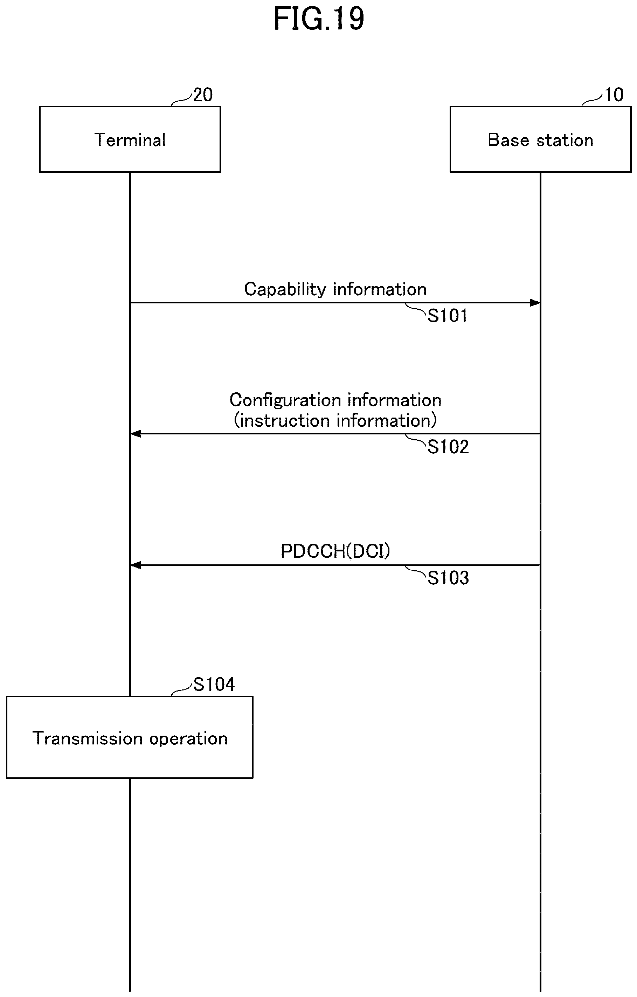

The present embodiment includes a first embodiment and a second embodiment. A basic operation example common to the first embodiment and the second embodiment will be described with reference to FIG. 19.

In S101, the terminal 20 transmits capability information to the base station 10. An example of the capability information will be described in the first embodiment. In S102, the base station 10 transmits configuration information (or instruction information) to the terminal 20. An example of the configuration information/instruction information will be described in the second embodiment.

The base station 10 determines configuration/instruction contents for the terminal 20 within the range of the capability of the terminal 20 indicated by the capability information of the terminal 20 received in S101, creates configuration information/instruction information, and transmits the pieces of information in S102. However, such assumption is merely an example.

The terminals 20 that have received the setting information/instruction information in the S102 operate in accordance with the information. In S103, when the terminals 20 receive DCI from the base stations 10, for example, the terminals 20 switch the band to which the port is connected based on the DCI in accordance with the setting information, and perform transmission using the switched port in S104.

The transmission of the configuration information/instruction information in S102 may be performed by any one of RRC signaling, a MAC CE, and a DCI. The outline of each of the first embodiment and the second embodiment is as follows.

### <Outline of First Embodiment>

The terminal 20 reports at least one of a plurality of pieces of capability information listed below as a function supported by the terminal 20 for Rel-18 UL Tx switching to the base station 10 as capability information. All of the examples listed below are examples of the capability information related to a band.

- Supported band combinations for UL Tx switching band (e.g. up to 3 or 4 bands)
- The number of CCs supportable in each band
- Whether or not a DL carrier (downlink carrier) associated with each band is necessary
- {presence or absence of simultaneous transmission support, switching period, band in which DL interruption occurs, presence or absence of power boosting support} for each combination of bands to be switched
- The number of ports capable of band switching
- Target band of a port to which the band is fixed
- Switching candidate band of each port

### <Outline of Second Embodiment>

The terminal 20 receives at least one of a plurality of pieces of configuration information/instruction information listed below from the base station 10 as the configuration information/instruction information for Rel-18 UL Tx switching. In other words, the base station 10 transmits at least one of a plurality of pieces of configuration information/instruction information listed below to the terminal 20. All of the examples listed below are examples of information related to band switching.

- DL/UL serving cell including UL used for Rel-18 UL Tx switching, and UL only serving cell (or any one of DL/UL serving cell and UL only serving cell)
- Other serving cells for which switching and/or simultaneous transmission may be instructed in each serving cell
- {whether or not a switching period is included, whether power boosting is allowed, whether simultaneous transmission is allowed, case interpretation when switching from a specific port configuration to another specific port configuration is instructed} for each combination with another serving cell in each serving cell
- The number of ports for band switching
- Whether or not each serving cell is associated with a port of a band switching target (or a non-switching target)

Hereinafter, each of the first embodiment and the second embodiment will be described in detail. Examples 1 to 9 of the first embodiment can be implemented in combination with any of Examples 1 to 10 of the second embodiment.

### (First Embodiment)

In the first embodiment, the terminal 20 reports at least one of the pieces of capability information shown in the following Examples 1 to 9 to the base station. Further, information obtained by combining a plurality of or all of Examples 1 to 9 may be reported.

### <Example 1>

The terminal 20 reports information on one or more band combinations (BCs) for UL Tx switching supported for Rel-18 UL Tx switching to the base station 10 separately from BC for UL CA.

The band combination (BC) for UL Tx switching to be reported may include a BC that does not support UL CA. Each band combination (BC) included in one or a plurality of BCs for UL Tx switching may be information indicating a combination of bands to be switched.

For example, when the terminal 20 reports BC1, BC2, and BC3 as BCs for UL-CA, the terminal 20 may report BC4 and BC5 as band combinations (BC) for UL Tx switching.

In addition, as a variation, there may be a restriction that each BC included in one or a plurality of band combinations (BCs) for UL Tx switching to be reported needs to be a BC supporting UL CA.

Furthermore, as another variation, there may be a restriction that, when a certain BC for UL Tx switching is reported in Rel-18, it is necessary to report the capability defined in Rel-16/17 for each band combination in the BC. In this case, for example, when BC of Band A-B-C is reported in Rel-18, it is necessary to report the capability defined in Rel-16/17 for A-B, A-C, and B-C.

In addition, as another variation, in Rel-18, when a certain BC is reported for UL Tx switching, there may be a restriction that each "band combination" in the BC needs to be supported. In this case, for example, when BC of Band A-B-C is reported in Rel-18, it is necessary to support A-B, A-C, and B-C.

### <Example 2>

The terminal 20 reports information on the number of CCs supported in each band of the BC for UL Tx switching described in Example 1 to the base station 10. The information on the number of CCs may be the number of CCs (the number of cells) itself. Note that the band (the band in which the number of CCs is reported) in Example 2 may be a band that is not the band in the BC reported in Example 1.

Also, an upper limit of the number of CCs that can be supported in each band or the total bandwidth in Rel-18 UL Tx switching may be stipulated in a technical specification. For example, for each band, "up to two consecutive CCs", "consecutive CCs in a 100 MHz band", or the like may be defined as the number of CCs that can be supported by the terminal 20. Also, the upper limit of the number of CCs that can be supported or the total bandwidth may be stipulated for each of TDD and FDD, instead of each band. For example, the base station 10 configures a CC within a band for UL Tx switching for the terminal 20 according to these regulations.

### <Example 3>

The terminal 20 reports, to the base station 10, information regarding whether or not a DL carrier associated with a band is necessary for each band of the BC for UL Tx switching described in Example 1. For example, when band_A, band_B and band_C of a BC exist, the terminal 20 reports information such as {band_A: DL carrier is required, band_B: DL carrier is not required, band_C: DL carrier is not required} for the BC. Note that, basically, it is only necessary that the terminal 20 can perform DL reception by any carrier, and thus it is possible a DL carrier in a certain band is not necessary.

Also, a condition of an UL carrier/band that does not require an associated DL carrier may be stipulated in the technical specification. The condition includes, for example, being TDD (or FDD), being a specific band, and being only a case where a specific band is included in the BC.

Note that the band (the band in which the necessity of the DL carrier is reported) in Example 3 may be a band that is not the band in the BC reported in Example 1.

### <Example 4>

The terminal 20 reports, to the base station 10, information regarding whether or not simultaneous transmission is supported for each combination of bands to be switched within the BC for UL Tx switching described in Example 1.

For example, the terminal 20 reports information such as, in a BC of bands A-B-C-D, simultaneous transmission being possible (dual UL or both) in bands A-B and simultaneous transmission being impossible (switched UL) in bands A-C and A-D to the base station 10.

The terminal 20 may report, to the base station 10, the information regarding whether or not simultaneous transmission is supported for each band, for all combinations in the BC, or for all BCs for Rel-18 UL Tx switching supported by the terminal 20, not for each combination of bands to be switched.

Note that the band (the band for reporting whether or not simultaneous transmission is supported) in Example 4 may be a band that is not the band in the BC reported in Example 1.

### <Example 5>

The terminal 20 reports information on a switching period for each combination of bands to be switched within the BC for UL Tx switching described in Example 1. The information on the switching period may be a value of the switching period.

For example, the terminal 20 reports information such as the switching period of bands A-B being n35 µs and the switching period of the bands A-C and A-D being n140 µs in the BC of the bands A-B-C-D to the base station 10.

Further, the terminal 20 may report the information on the switching period to the base station 10 not for each combination of bands to be switched, but for each band, for all combinations in the BC, or for all BCs for Rel-18 UL Tx switching supported by the terminal.

Furthermore, candidate values for the switching period may be newly defined for Rel-18 UL Tx switching, or some values that could be reported for Rel-16/17 may be made unreportable for Rel-18.

Note that the band (the band in which the switching period is reported) in Example 5 may be a band that is not the band in the BC reported in Example 1.

### <Example 6>

The terminal 20 may report a band in which DL interruption occurs for each combination of bands to be switched in the BC for UL Tx switching described in Example 1.

For example, the terminal 20 reports 0100 for bands A-B and 1010 for bands A-C, in the BC of the bands A-B-C-D to the base station 10. This bitmap indicates the bands A-B-C-D, meaning that DL interruption occurs at switching in a band corresponding to a bit of 1.

The terminal 20 may report, to the base station 10, information on a band in which DL interruption occurs, not for each combination of bands to be switched, but for each band, for all combinations in the BC, or for all BCs for Rel-18 UL Tx switching supported by the terminal.

Furthermore, whether or not DL interruption is allowed may be defined in the technical specification for each band combination for Rel-18 UL Tx switching or for each combination of two bands in a band combination.

Note that the band in Example 6 (the band in which DL interruption is reported) may be a band that is not the band in the BC reported in Example 1.

In Example 6, the base station 10 that has received the information indicating that DL interruption occurs in a certain band may perform scheduling assuming that DL interruption occurs, for example, when scheduling DL reception in the band.

### <Example 7>

The terminal 20 may report information regarding whether or not power boosting is supported for each combination of bands to be switched within the BC for UL Tx switching described in Example 1.

For example, the terminal 20 reports information indicating that power boosting is possible in bands A-B and is not possible in bands A-C and A-D in the BC of the bands A-B-C-D to the base station 10. The power boosting being possible in the bands A-B means that, for example, when the terminal 20 performs transmission of two ports in one band as a result of switching the ports between the bands A-B, the terminal 20 can increase transmission power (output power). Alternatively, the power boosting being in the bands A-B may mean that the transmission power (output power) can be increased when simultaneous transmission of the bands A and B is performed.

The terminal 20 may report, to the base station 10, the information regarding whether or not power boosting is supported for each band, for all combinations in the BC, or for all BCs for Rel-18 UL Tx switching supported by the terminal, not for each combination of bands to be switched.

Note that the band (band for which whether or not power boosting is possible is reported) in Example 7 may be a band that is not a band within the BC reported in Example 1.

The base station 10 that has received the information indicating that power boosting is possible in a certain band may perform transmission power control for the terminal 20 by a DCI or a MAC CE so that power boosting is performed when scheduling for two port simultaneous transmission in the band is performed.

### <Example 8>

The terminal 20 may report information regarding the number of ports (example: 1 or 2) capable of performing band switching within the BC for UL Tx switching described in Example 1 to the base station 10. In addition, when there is a port to which a band is fixed, a target band of the port to which the band is fixed may be reported. For example, the terminal 20 reports information such as that port 1 is fixed to the band A in the BC of the bands A-B-C-D to the base station 10.

In addition, when there is a port to which a band is fixed, a predetermined number of layers (for example, 2) may be reported as the number of MIMO layers for the target band, and the predetermined number of layers (for example, 2) may not be reported as the number of MIMO layers for the other bands.

Note that the band in Example 8 (the band for which the number of ports capable of band switching is reported) may be a band that is not the band in the BC reported in Example 1.

### <Example 9>

The terminal 20 may report information on a switching candidate band in each port in the BC for UL Tx switching described in Example 1. For example, the terminal 20 reports information to the base station 10 that, in the BC of the bands A-B-C-D, A and B are candidates for switching for port 1, and A, B, C, and D are candidates for switching for port 2.

The terminal 20 may report the number of ports supported in each band in the BC (for example, A is 2, B is 2, C is 1, D is 1, and the like) to the base station 10.

Note that the band (switching candidate band) in Example 9 may be a band that is not the band in the BC reported in Example 1.

As described above, according to the technology of the first embodiment described using Examples 1 to 9, the base station 10 can ascertain the capability related to UL Tx switching of the terminal 20, and thus can perform configuration, instruction, or scheduling for appropriately performing UL Tx switching.

### (Second Embodiment)

In the second embodiment, the terminal 20 is configured or instructed by the base station 10 to perform at least one of the following Examples 1 to 10 by any one of RRC signaling, a MAC-CE, and a DCI or a combination of a plurality of them. Further, the base station may configure or instruct the terminal 20 to perform a combination of a plurality of or all of Examples 1 to 10.

### <Example 1>

The terminal 20 is configured with a DL/UL serving cell (a cell having an UL carrier and a DL carrier) including UL used for Rel-18 UL Tx switching or an UL only serving cell (a cell of only an UL carrier) including UL used for Rel-18 UL Tx switching from the base station 10. The terminal 20 may be configured with both of the DL/UL serving cell including the UL used for the Rel-18 UL Tx switching and the UL only serving cell including the UL used for the Rel-18 UL Tx switching from the base station 10. Here, "being configured with certain information" means that the terminal 20 receives the information from the base station 10.

The base station 10 can determine which cell to configured in the terminal 20 based on the capability received from the terminal 20 in the first embodiment. For example, the base station 10 can configure the cell (carrier) included in the BC received in Example 1 of the first embodiment as a serving cell in the terminal 20.

Further, for example, the base station 10 may configure a cell of a band in which a DL carrier is unnecessary as an UL only serving cell in the terminal 20 based on the information received in Example 3 of the first embodiment.

A serving cell in the following Examples 2 to 9 is assumed to be a cell configured in the terminal 20 in Example 1. However, the present invention is not limited to this, and the serving cell in the following Example 2 to Example 10 may be a cell other than the cell configured in Example 1.

The configuration/instruction in the following Examples 2 to 10 may be performed at the time of the cell configuration in Example 1, or may be performed at a timing after the time of the cell configuration in Example 1.

### <Example 2>

The terminal 20 receives a specific IE/parameter from the base station 10 by ServingCellConfig for a certain cell, and the specific IE/parameter is configured in the terminal 20.

The terminal 20 may recognize that the cell includes UL used for Rel-18 UL Tx switching by the specific IE/parameter received from the base station 10. It should be noted that ServingCellConfig is an example and other messages or signals may be used.

### <Example 3>

The terminal 20 may recognize that a cell is an UL only serving cell used for Rel-18 UL Tx switching by a specific IE/parameter being configured by ServingCellConfig for the cell from the base station 10.

In addition, the terminal 20 may recognize that a cell is an UL only serving cell used for Rel-18 UL Tx switching, by not being configured with a specific IE/parameter in ServingCellConfig for the cell from the base station 10.

It should be noted that ServingCellConfig is an example and other messages or signals may be used.

### <Example 4>

The terminal 20 is configured by the base station 10 with information regarding other serving cells where switching and/or simultaneous transmission may be instructed for each serving cell. For example, the information of other serving cells where switching and/or simultaneous transmission may be instructed is included in ServingCellConfig.

For example, when the terminal 20 receives an RRC message (e.g., ServingCellConfig) for cell A and detects that the RRC message includes cell B as another serving cell for which switching/simultaneous transmission may be instructed, the terminal 20 assumes that switching/simultaneous transmission of the cell A and the cell B may be instructed.

### <Example 5>

The terminal 20 may be configured with information regarding whether or not a switching period is included for each combination with another serving cell in each serving cell from the base station 10. Alternatively, the information on whether or not the switching period is included may be configured in units of serving cells or in units of cell groups, instead of in units of combinations with other serving cells.

For example, it is assumed that information regarding whether or not a switching period is included is included in a certain RRC message (example: ServingCellConfig, CellGroupConfig). For example, the terminal 20 receives an RRC message for cell A, and it is assumed that the terminal detects information, in the RRC message, meaning that "In switching between the cell A and the cell B, a switching period exists in cell B". In this case, when the terminal 20 receives UL scheduling information in which switching occurs between the cell A and the cell B, the terminal 20 performs switching in the switching period on the cell B side.

### <Example 6>

The terminal 20 is configured with information regarding whether or not power boosting is allowed for each combination with another serving cell in each serving cell from the base station 10. Alternatively, information regarding whether power boosting is allowed may be configured in units of serving cells or in units of cell groups, instead of in units of combinations with other serving cells.

For example, it is assumed that information indicating whether power boosting is allowed is included in a certain RRC message (e.g., ServingCellConfig or CellGroupConfig). At this time, for example, it is assumed that the terminal 20 receives an RRC message and detects information indicating that "power boosting may be performed in a case where two port simultaneous transmission is performed in the cell A in switching between the cell A and the cell B" in the RRC message. In this case, for example, when the terminal 20 receives UL scheduling information in which two port simultaneous transmission occurs in the cell A due to switching from the cell B to the cell A, the terminal 20 performs power boosting.

### <Example 7>

The terminal 20 is configured with information on whether or not simultaneous transmission is allowed for each combination with another serving cell in each serving cell from the base station 10. Alternatively, information regarding whether or not simultaneous transmission is allowed may be configured in units of serving cells or in units of cell groups, rather than in units of combinations with other serving cells. Regarding the configuration in serving cell units, for example, in the case where "simultaneous transmission OK" is configured in the configuration for the cell A, this may mean that simultaneous transmission is OK with any cell in the case of a combination with the cell A.

For example, assume that information indicating whether simultaneous transmission is allowed is included in a certain RRC message (e.g., ServingCellConfig or CellGroupConfig). At this time, for example, it is assumed that the terminal 20 receives an RRC message for the cell A and detects information meaning "simultaneous transmission is possible in the cell A and the cell B" in the RRC message. In this case, the terminal 20 assumes that it receives UL scheduling information in which the simultaneous transmission occurs in the cell A and the cell B. In this case, the base station 10 can perform UL scheduling in which simultaneous transmission occurs in the cell A and the cell B, for the terminal 20.

### <Example 8>

The terminal 20 may be configured with information on case interpretation when the terminal 20 is instructed by the base station 10 to switch from a specific port configuration to another specific port configuration for each combination with another serving cell in each serving cell. Alternatively, information on case interpretation when switching from a specific port configuration to another specific port configuration is instructed may be configured not for each combination with another serving cell but for each serving cell or for each cell group.

For example, it is assumed that information on case interpretation is included in a certain RRC message (example: ServingCellConfig, CellGroupConfig).

At this time, for example, when the terminal 20 receives the RRC message and detects that "information for uniquely determining a case number of a transition destination when the transition destination is not uniquely determined, when transitioning from a state (a case number) of a Tx chain to a state (a case number) of another Tx chain after UL Tx switching" is included in the RRC message, the terminal 20 determines the Tx chain (port configuration) of the transition destination after UL Tx switching according to the information.

The "information for determination" may be explicit "a set of a case number before transition and a case number of a transition destination" or may be information indicating that "two ports are connected to one carrier" or may be information indicating that "one port is connected to one carrier".

Here, as an example, a case where the case configuration and the transmission port configuration of FIGs. 17 and 18 are used is assumed. In addition, it is assumed that "option 2: simultaneous transmission across up to 2 carriers" is configured. Also, for ease of explanation, it is assumed that only Case 1, Case 2, and Case 3 of FIG. 18 are used.

It is assumed that the terminal 20 is configured with "When the terminal 20 is in case 2 before the transition and case 1 and case 3 are candidates of the transition destination, the terminal 20 transitions to case 3" as the explicit information. At this time, in the state of case 2, when scheduling corresponding to 1P+0P+0P+0P is performed by a DCI, the terminal 20 switches to the case 3.

It is assumed that information indicating that "one port is connected to one carrier" is configured in the terminal 20 as the above-described information. At this time, in the case 2, when UL transmission is scheduled to be 1P+0P+0P+0P by a DCI, the terminal 20 switches to case 1.

The base station 10 can perform subsequent scheduling by assuming the transition destination.

### <Example 9>

The terminal 20 is configured with information on the number of ports of band switching targets in units of cell groups by the base station 10. In addition to or instead of this, the terminal 20 may be configured with information on whether or not each serving cell is associated with a port of a band switching target by the base station 10. In addition, the terminal 20 may be configured with information on whether or not each serving cell is associated with a port that is not a target of band switching by the base station 10.

The information on whether or not the serving cell is associated with a port of a band switching target is an example of information on an antenna port of a target of a band switching. The information on whether or not the serving cell is associated with a band switching nontarget port is an example of information on an antenna port that is not a target of band switching.

For example, when the terminal 20 receives information indicating "cell A and cell B are targets of switching of port 1 and cell C fixedly uses port 2" from the base station 10 by an RRC message, it is assumed that scheduling corresponding to "performing transmission in the cell A or the cell B by the port 1 and performing transmission in the cell C by the port 2" is performed. The base station 10 can perform scheduling corresponding to "performing transmission in the cell A or the cell B by the port 1 and performing transmission in the cell C by the port 2" for the terminal 20.

### <Example 10>

In Example 10, the following Example 10-1 to Example 10-3 will be explained. Each of Example 10-1 to Example 10-3 may be implemented independently or in combination with two or all three examples. In the following explanation, "uplinkTxSwitching-2T-Mode in CellGroupConfig" is one example of "a specific parameter notified by an RRC message." Additionally, "2T-mode is configured" refers to a case where the terminal 20 receives the uplinkTxSwitching-2T-Mode with "enabled" configured from the base station 10. Furthermore, "UL MIMO is configured" can be rephrased as "UL MIMO is indicated," "UL MIMO scheduling is performed by the base station 10," "UL MIMO is executed," or "UL MIMO is configured via an RRC messages or a MAC signaling." Similarly, "whether up to 2 ports is possible" can be rephrased as "whether UL MIMO with up to 2 ports is possible." When the terminal 10 is to receive parameters and the like, the terminal 10 performs monitoring before receiving the parameters and the like. As a result of monitoring, there may be cases where the terminal 10 does not receive the parameters.

### <Example 10-1>

In Example 10-1, when the terminal 20 is configured with UL Tx switching for three or more bands by the base station 10, it interprets uplinkTxSwitching-2T-Mode in CellGroupConfig using one of the following methods (Alt.1 to Alt.5). The base station 10 may notify the terminal 20 of the interpretation method, or the terminal 20 and the base station 10 may determine the interpretation method based on UE capability. Alternatively, if the interpretation method is defined in the technical specification, the terminal 20 and the base station 10 may determine the interpretation method in accordance with the technical specification.

Alt.1: If 2T-mode is configured, the terminal 20 assumes that UL MIMO with up to 2 ports (a maximum of 2 ports) is configured for all bands where UL Tx switching is configured. If 2T-mode is not configured, the terminal 20 assumes that UL MIMO with up to 2 ports is not configured in at least one of the configured bands.

As a variation of Alt.1, the terminal may have the following assumptions.

The terminal 20 assumes that, if 2T-mode is configured, UL MIMO with up to 2 ports (a maximum of 2 ports) is not configured for all bands where UL Tx switching is configured. If 2T-mode is not configured, the terminal 20 assumes that UL MIMO with up to 2 ports is configured for at least one of the configured bands.

Alt.2: The terminal 20 assumes that if 2T-mode is configured, UL MIMO with up to 2 ports is configured for at least one of the bands where UL Tx switching is configured. If 2T-mode is not configured, the terminal 20 assumes that UL MIMO with up to 2 ports is not configured for all bands.

As a variation of Alt.2, the terminal 20 may have the following assumptions.

The terminal 20 assumes that if 2T-mode is configured, UL MIMO with up to 2 ports is not configured for at least one of the bands where UL Tx switching is configured. If 2T-mode is not configured, the terminal 20 assumes that UL MIMO with up to 2 ports is configured for all bands.

Alt.3: The terminal 20 assumes that 2T-mode is not configured.

Alt.4: The terminal 20 assumes that 2T-mode is always configured.

Alt.5: The terminal 20 ignores 2T-mode.

From the perspective of the base station 10, the following operations/assumptions may be applied for each Alt.

Alt.1: If the base station 10 configures 2T-mode for the terminal 20, it assumes that UL MIMO with up to 2 ports (a maximum of 2 ports) is configured in the terminal 20 for all bands where UL Tx switching is configured. If the base station 10 does not configure 2T-mode for the terminal 20, it assumes that UL MIMO with up to 2 ports is not configured in the terminal 20 for at least one of the configured bands.

As a variation of Alt.1, the base station may have the following assumptions.

If the base station 10 configures 2T-mode for the terminal 20, it assumes that UL MIMO with up to 2 ports (a maximum of 2 ports) is not configured in the terminal 20 for all bands where UL Tx switching is configured. If the base station 10 does not configure 2T-mode for the terminal 20, it assumes that UL MIMO with up to 2 ports is configured in the terminal 20 for at least one of the configured bands.

Alt.2: If the base station 10 configures 2T-mode for the terminal 20, it assumes that UL MIMO with up to 2 ports is configured in the terminal 20 for at least one of bands where UL Tx switching is configured. If the base station 10 does not configure 2T-mode for the terminal 20, it assumes that UL MIMO with up to 2 ports is not configured in the terminal 20 for all bands.

As a variation of Alt.2, the following operations/assumptions may be applied.

Alt.3: If the base station 10 configures 2T-mode for the terminal 20, it assumes that UL MIMO with up to 2 ports is not configured in the terminal 20 for at least one of bands where UL Tx switching is configured. If the base station 10 does not configure 2T-mode for the terminal 20, it assumes that UL MIMO with up to 2 ports is configured in the terminal 20 for all bands.

Alt.3: The base station 10 does not configure 2T-mode for the terminal 20.

Alt.4: The base station 10 always configures 2T-mode for the terminal 20.

Alt.5: The base station 10 assumes that 2T-mode is ignored by the terminal 20.

### <Example 10-2>

If the terminal 20 is configured with UL Tx switching for three or more bands by the base station 10, the terminal 20 may determine whether up to 2 ports is possible by assuming the maximum number of UL antenna ports configured for each serving cell or presence or absence of UL MIMO configuration, according to uplinkTxSwitching-2T-Mode in CellGroupConfig (this corresponds to the above Alt.1/2 cases).

Alternatively, if the terminal 20 is configured with UL Tx switching for three or more bands by the base station 10, the terminal 20 may determine whether up to 2 ports is possible in which serving cell based on the maximum number of UL antenna ports configured for each serving cell or the presence or absence of UL MIMO configuration, regardless of uplinkTxSwitching-2T-Mode in CellGroupConfig (this corresponds to the above Alt.3/4/5 cases).

The base station 10 may assume that the terminal 20 makes the above determination and perform reception operations for transmissions with up to 2 ports accordingly.

### <Example 10-3>

If the terminal 20 is configured with UL Tx switching for three or more bands by the base station 10, the terminal 20 may be notified by the base station 10 of the number of bands where up to 2 ports is possible by a new parameter in CellGroupConfig. The "new parameter" refers to a parameter that is not defined in the existing technical specifications. The "new parameter" may also refer to a parameter that exists in the existing technical specifications by name but is not specified in those technical specifications as a parameter for notifying the number of bands where up to 2 ports is possible.

Additionally, the "new parameter" is an example of "specific parameter notified via an RRC message."

With the explanations provided in Example 10, the assumptions and operations related to UL MIMO can be clarified.

As described above, according to the technology of the second embodiment described using Examples 1 to 10, for example, the base station 10 can perform configuration/instruction according to the capability related to UL Tx switching for the terminal 20, and thus it is possible to appropriately perform UL Tx switching.

### (Apparatus Configuration)

Next, functional configuration examples of the base station 10 and the terminal 20 that execute the processes and operations described above will be described.

### <Base station 10>

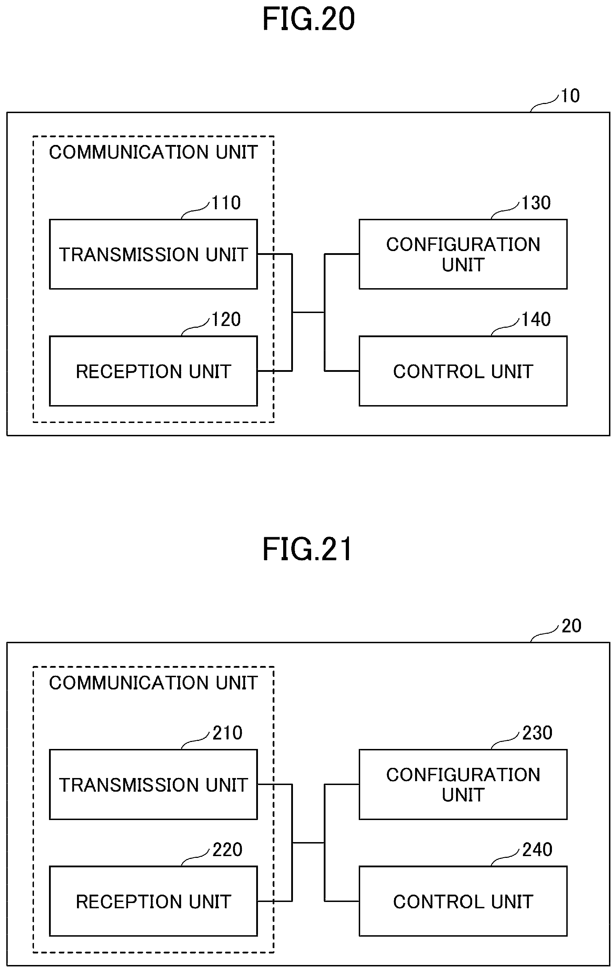

FIG. 20 is a diagram illustrating an example of a functional configuration of the base station 10. As illustrated in FIG. 20, the base station 10 includes a transmission unit 110, a reception unit 120, a configuration unit 130, and a control unit 140. The functional configuration shown in FIG. 20 is merely an example. The functional sections and the names of the functional units may be any name as long as the operations according to the embodiment of the present invention can be executed. The transmission unit 110 and the reception unit 120 may be collectively referred to as a communication unit.

The transmission unit 110 includes a function of generating a signal to be transmitted to the terminal 20 side and transmitting the signal by radio. The reception unit 120 includes a function of receiving various signals transmitted from the terminal 20 and acquiring, for example, information of a higher layer from the received signal. The transmission unit 110 has a function of transmitting NR-PSS, NR-SSS, NR-PBCH, DL/UL control signal, DCI by PDCCH, data by PDSCH, and the like to the terminal 20.

The configuration unit 130 stores configuration information set in advance and various kinds of configuration information to be transmitted to the terminal 20 in a storage device included in the configuration unit 130, and reads the configuration information from the storage device as necessary.

The control unit 140 performs scheduling of DL reception or UL transmission of the terminal 20 via the transmission unit 110. The control unit 140 also includes a function of performing LBT. The functional unit related to signal transmission in the control unit 140 may be included in the transmission unit 110, and the functional unit related to signal reception in the control unit 140 may be included in the reception unit 120. The transmission unit 110 may be referred to as a transmitter, and the reception unit 120 may be referred to as a receiver.

### <Terminal 20>

FIG. 21 is a diagram illustrating an example of a functional configuration of the terminal 20. As illustrated in FIG. 21, the terminal 20 includes a transmission unit 210, a reception unit 220, a configuration unit 230, and a control unit 240. The functional configuration shown in FIG. 21 is merely an example. The functional sections and the names of the functional units may be any as long as the operations according to the embodiment of the present invention can be executed. The transmission unit 210 and the reception unit 220 may be collectively referred to as a communication unit.

The transmission unit 210 creates a transmission signal from the transmission data and transmits the transmission signal by radio. The reception unit 220 receives various signals by radio and acquires a signal of a higher layer from the received signal of the physical layer. Also, the reception unit 220 has a function of receiving NR-PSS, NR-SSS, NR-PBCH, DL/UL/SL control signal, DCI by PDCCH, data by PDSCH and so on, transmitted from the base station 10. For example, the transmission unit 210 may transmit a physical sidelink control channel (PSCCH), a physical sidelink shared channel (PSSCH), a physical sidelink discovery channel (PSDCH), a physical sidelink broadcast channel (PSBCH), or the like to other terminals 20 as D2D communication, and the reception unit 220 may receive the PSCCH, the PSSCH, the PSDCH, the PSBCH, or the like from other terminals 20. In addition, the transmission unit 210 includes an antenna port described in the present embodiment.

The configuration unit 230 stores various types of configuration information received from the base station 10 or another terminal by the reception unit 220 in a storage device included in the configuration unit 230, and reads the configuration information from the storage device as necessary. The configuration unit 230 also stores configuration information set in advance.

The control unit 240 controls the terminal 20. The functional unit related to signal transmission in the control unit 240 may be included in the transmission unit 210, and the functional unit related to signal reception in the control unit 240 may be included in the reception unit 220. The transmission unit 210 may be referred to as a transmitter, and the reception unit 220 may be referred to as a receiver.

According to the present embodiment, at least the following terminal, base station, and communication method are provided. Hereinafter, the terminal, the base station, and the communication method will be described in Clauses 1 to 7.

### <Supplementary Note 1>

### [Clause 1]

A terminal including:
a transmission unit configured to report, to a base station, a number of antenna ports that can perform band switching as capability information, in a transmission switching scheme in which at least one antenna port of a plurality of antenna ports can switch bands across two or more bands and the plurality of antenna ports in total switch bands for transmission across three or more bands; and
a reception unit configured to receive, from the base station, information on an antenna port that is a target for which band switching is performed, or information on an antenna port that is not a target for which band switching is performed.

### [Clause 2]

A terminal including:
a transmission unit configured to report, to a base station, information of a band that an antenna port by which band switching is not performed uses as capability information, in a transmission switching scheme in which at least one antenna port of a plurality of antenna ports can switch bands across two or more bands and the plurality of antenna ports in total switch bands for transmission across three or more bands; and
a reception unit configured to receive, from the base station, information on an antenna port that is a target for which band switching is performed, or information on an antenna port that is not a target for which band switching is performed.

### [Clause 3]

The terminal as described in Clause 1, wherein, when there is an antenna port in which band switching is not performed, the transmission unit reports that a number of MIMO layers of a band that the antenna port uses is two.

### [Clause 4]

The terminal as described in Clause 1, wherein the transmission unit reports information on a band of a switching candidate in each antenna port.

### [Clause 5]

A base station including:
a reception unit configured to receive, from a terminal, a number of antenna ports that can perform band switching as capability information, in a transmission switching scheme in which at least one antenna port of a plurality of antenna ports can switch bands across two or more bands and the plurality of antenna ports in total switch bands for transmission across three or more bands; and
a transmission unit configured to transmit, to the terminal, information on an antenna port that is a target for which band switching is performed, or information on an antenna port that is not a target for which band switching is performed.

### [Clause 6]

A commination method executed by a terminal, the communication method including:
reporting, to a base station, a number of antenna ports that can perform band switching as capability information, in a transmission switching scheme in which at least one antenna port of a plurality of antenna ports can switch bands across two or more bands and the plurality of antenna ports in total switch bands for transmission across three or more bands; and
receiving, from the base station, information on an antenna port that is a target for which band switching is performed, or information on an antenna port that is not a target for which band switching is performed.

According to any of Clauses 1 to 6, a technology is provided that enables appropriate switching of a band used for uplink transmission in a radio communication system. According to Clause 3, the number of MIMO layers can be appropriately configured. According to Clause 4, simultaneous monitoring can be clearly defined, and the operation becomes clear. To satisfactorily receive single control information in a cell of a scheduling source. According to Clause 3, the switching candidate band is clarified.

### <Supplementary Note 2>

### [Clause 1]

A terminal including:
a transmission unit configured to report, to a base station, information related to a band for use in a transmission switching scheme as capability information, in the transmission switching scheme in which at least one antenna port of a plurality of antenna ports can switch bands across two or more bands and the plurality of antenna ports in total switch bands for transmission across three or more bands; and
a reception unit configured to receive, from the base station, information for determining one state among a plurality of states in a case where there are the plurality of states that are transmission destination candidates when transitioning from a certain state related to a plurality of antenna ports to another state due to band switching.

### [Clause 2]

The terminal as described in Clause 1, wherein the reception unit receives, as the information for determining the one state, a maximum number of antenna ports that can be used for transmission by one band, or a pair of a state before transition and a state after transition.

### [Clause 3]

The terminal as described in Clause 1, wherein the reception unit reports, to the base station, a number of carriers supported by a band for use in the transmission switching scheme.

### [Clause 4]

The terminal as described in Clause 1, wherein the transmission unit reports information related to whether or not a downlink carrier is necessary in a band for use in the transmission switching scheme.

### [Clause 5]

A base station including:
a reception unit configured to receive, from a terminal, information related to a band for use in a transmission switching scheme as capability information, in the transmission switching scheme in which at least one antenna port of a plurality of antenna ports can switch bands across two or more bands and the plurality of antenna ports in total switch bands for transmission across three or more bands; and
a transmission unit configured to transmit, to the terminal, information for determining one state among a plurality of states in a case where there are the plurality of states that are transmission destination candidates when transitioning from a certain state related to a plurality of antenna ports to another state due to band switching.

### [Clause 6]

A communication method executed by a terminal, the communication method including:
reporting, to a base station, information related to a band for use in a transmission switching scheme as capability information, in the transmission switching scheme in which at least one antenna port of a plurality of antenna ports can switch bands across two or more bands and the plurality of antenna ports in total switch bands for transmission across three or more bands; and
receiving, from the base station, information for determining one state among a plurality of states in a case where there are the plurality of states that are transmission destination candidates when transitioning from a certain state related to a plurality of antenna ports to another state due to band switching.

According to any of Clauses 1 to 6, a technology is provided that enables appropriate switching of a band used for uplink transmission in a radio communication system. According to Clause 2, ambiguity of a transition destination can be resolved, and an appropriate operation can be performed. According to Clause 3, the number of carriers in a band is clarified. According to Clause 4, it is possible to configure a cell that does not have a downlink carrier.

### <Supplementary Note 3>

### [Clause 1]

A terminal including:
a transmission unit configured to report, to a base station, capability information indicating whether power boosting can be performed when performing transmission using a plurality of antenna ports, in a transmission switching scheme in which at least one antenna port of a plurality of antenna ports can switch bands across two or more bands and the plurality of antenna ports in total switch bands for transmission across three or more bands; and
a reception unit configured to receive, from the base station, information related to whether power boosting is allowed when performing transmission using a plurality of antenna ports.

### [Clause 2]

The terminal as described in Clause 1, wherein the transmission unit reports the capability information indicating whether power boosting can be performed to the base station, for each combination of bands for performing switching in band combinations, for each band, for each combination of all combinations of bands in band combinations, or for all supported band combinations.

### [Clause 3]

The terminal as described in Clause 1, wherein the reception unit receives the information related to whether power boosting is allowed for each combination of serving cells, for each serving cell, or for each cell group.

### [Clause 4]

A base station including:
a reception unit configured to receive, from a terminal, capability information indicating whether power boosting can be performed when performing transmission using a plurality of antenna ports, in a transmission switching scheme in which at least one antenna port of a plurality of antenna ports can switch bands across two or more bands and the plurality of antenna ports in total switch bands for transmission across three or more bands; and
a transmission unit configured to transmit, to the terminal, information related to whether power boosting is allowed when performing transmission using a plurality of antenna ports.

### [Clause 5]

A communication method executed by a terminal, the communication method including:
reporting, to a base station, capability information indicating whether power boosting can be performed when performing transmission using a plurality of antenna ports, in a transmission switching scheme in which at least one antenna port of a plurality of antenna ports can switch bands across two or more bands and the plurality of antenna ports in total switch bands for transmission across three or more bands; and
receiving, from the base station, information related to whether power boosting is allowed when performing transmission using a plurality of antenna ports.

According to any of Clauses 1 to 5, a technology is provided that enables appropriate switching of a band used for uplink transmission in a radio communication system. According to Clause 2, information related to power boosting can be reported in various units. According to Clause 3, information related to power boosting can be configured in various units.

### <Supplementary Note 4>

### [Clause 1]

A terminal including:
a transmission unit configured to report, to a base station, capability information related to a band in which downlink communication interruption occurs when switching is performed, in a transmission switching scheme in which at least one antenna port of a plurality of antenna ports can switch bands across two or more bands and the plurality of antenna ports in total switch bands for transmission across three or more bands; and
a reception unit configured to receive, from the base station, control information for performing scheduling of uplink transmission.

### [Clause 2]

The terminal as described in Clause 1, wherein the transmission unit reports the capability information related to a band in which communication interruption occurs when switching is performed to the base station, for each combination of bands for performing transmission switching in band combinations, for each band, for each combination of all combinations of bands in band combinations, or for all supported band combinations.

### [Clause 3]

The terminal as described in Clause 1, the transmission unit reports, as the capability information, a bitmap in which each bit indicates presence or absence of downlink transmission interruption in a band.

### [Clause 4]

A base station including:
a reception unit configured to receive, from a terminal, capability information related to a band in which downlink communication interruption occurs when switching is performed, in a transmission switching scheme in which at least one antenna port of a plurality of antenna ports can switch bands across two or more bands and the plurality of antenna ports in total switch bands for transmission across three or more bands; and
a transmission unit configured to transmit, to the terminal, control information for performing scheduling of uplink transmission.

### [Clause 5]

A communication method executed by a terminal, the communication method including:
reporting, to a base station, capability information related to a band in which downlink communication interruption occurs when switching is performed, in a transmission switching scheme in which at least one antenna port of a plurality of antenna ports can switch bands across two or more bands and the plurality of antenna ports in total switch bands for transmission across three or more bands; and
receiving, from the base station, control information for performing scheduling of uplink transmission.

According to any of Clauses 1 to 5, a technology is provided that enables appropriate switching of a band used for uplink transmission in a radio communication system. According to Clause 2, information on downlink communication interruption can be reported in various units. According to Clause 3, information on downlink communication interruption can be efficiently reported.

### <Supplementary Note 5>

### [Clause 1]

A terminal including:
a transmission unit configured to report, to a base station, capability information indicating a switching period required for switching between bands, in a transmission switching scheme in which at least one antenna port of a plurality of antenna ports can switch bands across two or more bands and the plurality of antenna ports in total switch bands for transmission across three or more bands; and
a reception unit configured to receive, from the base station, information related to a cell in which the switching period occurs.

### [Clause 2]

The terminal as described in Clause 1, wherein the transmission unit reports the capability information indicating a switching period, for each combination of bands for performing switching in band combinations, for each band, for each combination of all combinations of bands in band combinations, or for all supported band combinations.

### [Clause 3]

The terminal as described in Clause 1, wherein the reception unit receives the information related to a cell in which the switching period occurs for each combination of serving cells, for each serving cell, or for each cell group.

### [Clause 4]

A base station including:
a reception unit configured to receive, from a terminal, capability information indicating a switching period required for switching between bands, in a transmission switching scheme in which at least one antenna port of a plurality of antenna ports in the terminal can switch bands across two or more bands and the plurality of antenna ports in total switch bands for transmission across three or more bands; and
a transmission unit configured to transmit, to the terminal, information related to a cell in which the switching period occurs.

### [Clause 5]

A communication method executed by a terminal, the communication method including:
reporting, to a base station, capability information indicating a switching period required for switching between bands, in a transmission switching scheme in which at least one antenna port of a plurality of antenna ports can switch bands across two or more bands and the plurality of antenna ports in total switch bands for transmission across three or more bands; and
receiving, from the base station, information related to a cell in which the switching period occurs.

According to any of Clauses 1 to 5, a technology is provided that enables appropriate switching of a band used for uplink transmission in a radio communication system. According to Clause 2, capability information indicating a switching period can be reported in various units. According to Clause 3, information on the switching period can be configured in various units.

### <Supplementary Note 6>

### [Clause 1]

A terminal including:
a transmission unit configured to report, to a base station, capability information indicating whether simultaneous transmission is possible between bands, in a transmission switching scheme in which at least one antenna port of a plurality of antenna ports can switch bands across two or more bands and the plurality of antenna ports in total switch bands for transmission across three or more bands; and
a reception unit configured to receive, from the base station, information related to a cell in which simultaneous transmission is allowed.

### [Clause 2]

The terminal as described in Clause 1, wherein the transmission unit reports the capability information indicating whether simultaneous transmission is possible, for each combination of bands for performing switching in band combinations, for each band, for each combination of all combinations of bands in band combinations, or for all supported band combinations.

### [Clause 3]

The terminal as described in Clause 1, wherein the reception unit receives the information related to a cell in which simultaneous transmission is allowed for each combination of serving cells, for each serving cell, or for each cell group.

### [Clause 4]

A base station including:
a reception unit configured to receive, from a terminal, capability information indicating whether simultaneous transmission is possible between bands, in a transmission switching scheme in which at least one antenna port of a plurality of antenna ports in the terminal can switch bands across two or more bands and the plurality of antenna ports in total switch bands for transmission across three or more bands; and
a transmission unit configured to transmit, to the terminal, information related to a cell in which simultaneous transmission is allowed.

### [Clause 5]

A communication method executed by a terminal, the communication method including:
reporting, to a base station, capability information indicating whether simultaneous transmission is possible between bands, in a transmission switching scheme in which at least one antenna port of a plurality of antenna ports can switch bands across two or more bands and the plurality of antenna ports in total switch bands for transmission across three or more bands; and
receiving, from the base station, information related to a cell in which simultaneous transmission is allowed.

According to any of Clauses 1 to 5, a technology is provided that enables appropriate switching of a band used for uplink transmission in a radio communication system. According to Clause 2, capability information indicating whether or not simultaneous transmission is possible can be reported in various units. According to Clause 3, various information related to simultaneous transmission can be configured.

### <Supplementary Note 7>

### [Clause 1]

A terminal including:
a reception unit configured to receive, from a base station, a specific parameter indicated by an RRC message, in a transmission switching scheme in which at least one antenna port of a plurality of antenna ports can switch bands across two or more bands and the plurality of antenna ports in total switch bands for transmission across three or more bands; and
a control unit configured to assume presence or absence of configuration of UL MIMO of up to two ports in a band in which transmission switching is configured based on whether the reception unit receives the specific parameter or not.

### [Clause 2]

The terminal as described in Clause 1, wherein the specific parameter is a parameter related to configuration of a transmission switching mode.

### [Clause 3]

A terminal including:
a reception unit configured to receive, from a base station, a specific parameter notified by an RRC message, in a transmission switching scheme in which at least one antenna port of a plurality of antenna ports can switch bands across two or more bands and the plurality of antenna ports in total switch bands for transmission across three or more bands; and
a control unit configured to assume that the reception unit does not receive the specific parameter, assume that the reception unit always receives the specific parameter, or ignores the specific parameter.

### [Clause 4]

The terminal as described in Clause 3, wherein the control unit determines which serving cell can perform transmission with up to two ports based on configuration in each serving cell, regardless of the specific parameter.

### [Clause 5]

A base station including:
a transmission unit configured to transmit, to a terminal, a specific parameter by an RRC message, in a transmission switching scheme in which at least one antenna port of a plurality of antenna ports can switch bands across two or more bands and the plurality of antenna ports in total switch bands for transmission across three or more bands; and
a control unit configured to assume presence or absence of configuration of UL MIMO of up to two ports in a band in which transmission switching is configured in the terminal based on whether the transmission unit transmits the specific parameter or not.

### [Clause 6]

A communication method executed by a terminal, the communication method including:
monitoring a specific parameter notified by an RRC message, in a transmission switching scheme in which at least one antenna port of a plurality of antenna ports can switch bands across two or more bands and the plurality of antenna ports in total switch bands for transmission across three or more bands; and
assuming presence or absence of configuration of UL MIMO of up to two ports in a band in which transmission switching is configured based on whether the terminal receives the specific parameter or not.

According to any of Clauses 1 to 6, a technology is provided that enables appropriate switching of a band used for uplink transmission in a radio communication system. According to Clause 2, it is possible to clarify the assumption when a parameter related to configuration of a transmission switching mode is received. According to Clause 4, it is possible to clarify the assumption of UL MIMO operation even when a specific parameter is not transmitted.

### (Hardware Configuration)

The block diagrams (FIGs. 20 and 21) used in the description of the embodiment described above illustrate the block of functional units. Such functional blocks (configuration parts) are attained by at least one arbitrary combination of hardware and software. In addition, an attainment method of each of the function blocks is not particularly limited. That is, each of the function blocks may be attained by using one apparatus that is physically or logically coupled, by directly or indirectly (for example, in a wired manner, over the radio, or the like) connecting two or more apparatuses that are physically or logically separated and by using such a plurality of apparatuses. The function block may be attained by combining one apparatus described above or a plurality of apparatuses described above with software.

The function includes determining, judging, calculating, computing, processing, deriving, investigating, looking up, ascertaining, receiving, transmitting, output, accessing, resolving, selecting, choosing, establishing, comparing, assuming, expecting, presuming, broadcasting, notifying, communicating, forwarding, configuring, reconfiguring, allocating (mapping), assigning, and the like, but is not limited thereto. For example, a function block (a configuration part) that functions to transmit is referred to as the transmitting unit or the transmitter. As described above, the attainment method thereof is not particularly limited.

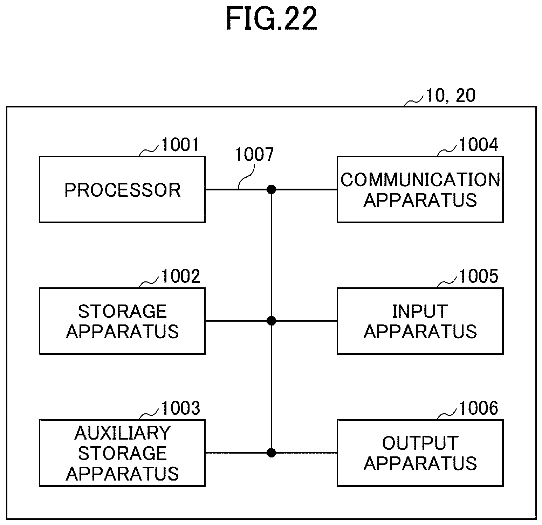

For example, the base station 10, the terminal 20 and the like in one embodiment of this disclosure may function as a computer for performing the processing of a radio communication method of this disclosure. FIG. 22 is a diagram illustrating an example of a hardware configuration of the base station 10 and the terminal 20 according to one embodiment of this disclosure. The base station 10 and the terminal 20 described above may be physically configured as a computer apparatus including a processor 1001, a storage device 1002, an auxiliary storage device 1003, a communication device 1004, an input device 1005, an output device 1006, a bus 1007, and the like.

Note that, in the following description, the word "apparatus" can be replaced with a circuit, a device, a unit, or the like. The hardware configuration of the base station 10 and the terminal 20 may be configured to include one or a plurality of apparatuses illustrated in the drawings, or may be configured not to include a part of the apparatuses.

Each function of the base station 10 and the terminal 20 is attained by reading predetermined software (a program) on hardware such as the processor 1001 and the storage device 1002 such that the processor 1001 performs an operation, and by controlling the communication of the communication device 1004 or by controlling at least one of reading and writing of data in the storage device 1002 and the auxiliary storage device 1003.

The processor 1001, for example, controls the entire computer by operating an operating system. The processor 1001 may be configured by a central processing unit (CPU) including an interface with respect to the peripheral equipment, a control apparatus, an operation apparatus, a register, and the like. For example, the control unit 140, the control unit 240, or the like, described above, may be attained by the processor 1001.

In addition, the processor 1001 reads out a program (a program code), a software module, data, and the like to the storage device 1002 from at least one of the auxiliary storage device 1003 and the communication device 1004, and thus, executes various processing. A program for allowing a computer to execute at least a part of the operation described in the embodiment described above is used as the program. The control unit 140 of the base station 10 shown in FIG. 20 may be attained by a control program that is stored in the storage device 1002 and is operated by the processor 1001. Also, for example, the control unit 240 of the terminal 20 shown in FIG. 21 may be attained by a control program that is stored in the storage device 1002 and is operated by the processor 1001. It has been described that the various processing described above are executed by one processor 1001, but the various processing may be simultaneously or sequentially executed by two or more processors 1001. The processor 1001 may be mounted on one or more chips. Note that, the program may be transmitted from a network through an electric communication line.

The storage device 1002 is a computer readable recording medium, and for example, may be configured of at least one of a read only memory (ROM), an erasable programmable ROM (EPROM), an electrically erasable programmable ROM (EEPROM), a random access memory (RAM), and the like. The storage device 1002 may be referred to as a register, a cache, a main memory (a main storage unit), and the like. The storage device 1002 is capable of retaining a program (a program code), a software module, and the like that can be executed in order to implement a communication method according to one embodiment of this disclosure.

The auxiliary storage device 1003 is a computer readable recording medium, and for example, may be configured of at least one of an optical disk such as a compact disc ROM (CD-ROM), a hard disk drive, a flexible disk, a magnetooptical disk (for example, a compact disc, a digital versatile disk, and a Blu-ray (Registered Trademark) disc), a smart card, a flash memory (for example, a card, a stick, a key drive), a floppy (Registered Trademark) disk, a magnetic strip, and the like. The storage medium described above, for example, may be a database including at least one of the storage device 1002 and the auxiliary storage device 1003, a server, and a suitable medium.

The communication device 1004 is hardware (a transmitting and receiving device) for performing communication with respect to the computer through at least one of a wire network and a radio network, and for example, is also referred to as a network device, a network controller, a network card, a communication module, and the like. The communication device 1004, for example, may be configured by including a high frequency switch, a duplexer, a filter, a frequency synthesizer, and the like, in order to attain at least one of frequency division duplex (FDD) and time division duplex (TDD). For example, a transmitting and receiving antenna, an amplifier, a transmitting and receiving unit, a transmission path interface, and the like may be attained by the communication device 1004. In the transmitting and receiving unit, the transmitting unit and the receiving unit are mounted by being physically or logically separated.

The input device 1005 is an input device for receiving input from the outside (for example, a keyboard, a mouse, a microphone, a switch, a button, a sensor, and the like). The output device 1006 is an output device for implementing output with respect to the outside (for example, a display, a speaker, an LED lamp, and the like). Note that, the input device 1005 and the output device 1006 may be integrally configured (for example, a touch panel).

In addition, each of the apparatuses such as the processor 1001 and the storage device 1002 may be connected by the bus 1007 for performing communication with respect to information. The bus 1007 may be configured by using a single bus, or may be configured by using buses different for each of the apparatuses.

In addition, the base station 10 and the terminal 20 may be configured by including hardware such as a microprocessor, a digital signal processor (DSP), an application specific integrated circuit (ASIC), a programmable logic device (PLD), and a field programmable gate array (FPGA), and a part or all of the respective function blocks may be attained by the hardware. For example, the processor 1001 may be mounted by using at least one of the hardware.

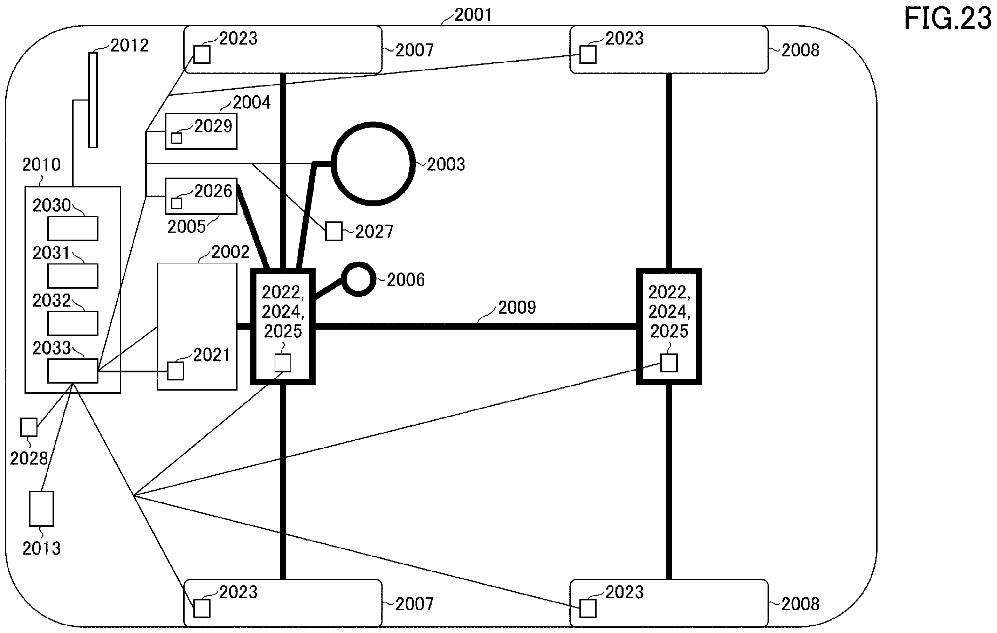

The terminal 20 or the base station 10 may be provided in a vehicle. FIG. 23 shows a configuration example of a vehicle 2001 according to the present embodiment. As shown in FIG. 13, the vehicle 2001 includes a drive unit 2002, a steering unit 2003, an accelerator pedal 2004, a brake pedal 2005, a shift lever 2006, front wheels 2007, rear wheels 2008, an axle 2009, an electronic control unit 2010, various sensors 2021-2029, an information service unit 2012, and a communication module 2013. Each aspect/embodiment described in the present disclosure may be applied to a communication apparatus mounted on the vehicle 2001, and may be applied to, for example, the communication module 2013. The functions of the terminal 20 may be incorporated in the communication module 2013.

The drive unit 2002 may include, for example, an engine, a motor, and a hybrid of an engine and a motor. The steering unit 2003 includes at least a steering wheel and is configured to steer at least one of the front wheel and the rear wheel, based on the operation of the steering wheel operated by the user.

The electronic control unit 2010 includes a microprocessor 2031, a memory (ROM, RAM) 2032, and a communication port (IO port) 2033. The electronic control unit 2010 receives signals from the various sensors 2021-2029 provided in the vehicle 2001. The electronic control unit 2010 may be referred to as an ECU (Electronic control unit).

The signals from the various sensors 2021 to 2029 include a current signal from a current sensor 2021 which senses the current of the motor, a front or rear wheel rotation signal acquired by a revolution sensor 2022, a front or rear wheel pneumatic signal acquired by a pneumatic sensor 2023, a vehicle speed signal acquired by a vehicle speed sensor 2024, an acceleration signal acquired by an acceleration sensor 2025, a stepped-on accelerator pedal signal acquired by an accelerator pedal sensor 2029, a stepped-on brake pedal signal acquired by a brake pedal sensor 2026, an operation signal of a shift lever acquired by a shift lever sensor 2027, and a detection signal, acquired by the object detection sensor 2028, for detecting an obstacle, a vehicle, a pedestrian, and the like.

The information service unit 2012 includes various devices for providing (outputting) various kinds of information such as driving information, traffic information, and entertainment information, including a car navigation system, an audio system, a speaker, a television, and a radio, and one or more ECUs controlling these devices. The information service unit 2012 provides various types of multimedia information and multimedia services to the occupants of the vehicle 2001 by using information obtained from the external device through the communication module 2013 or the like. The information service unit 2012 may include an input device that accepts external inputs (e.g., a keyboard, mouse, microphone, switch, button, sensor, touch panel, etc.) and may include an output device that performs output to external sources (e.g., a display, speaker, LED lamp, touch panel, etc.).

A driving support system unit 2030 includes: various devices for providing functions of preventing accidents and reducing driver's operating loads such as a millimeter wave radar, a LiDAR (Light Detection and Ranging), a camera, a positioning locator (e.g., GNSS, etc.), map information (e.g., high definition (HD) map, autonomous vehicle (AV) map, etc.), a gyro system (e.g., IMU (Inertial Measurement Unit), INS (Inertial Navigation System), etc.), an AI (Artificial Intelligence) chip, an AI processor; and one or more ECUs controlling these devices. In addition, the driving support system unit 2030 transmits and receives various types of information via the communication module 2013 to realize a driving support function or an autonomous driving function.

The communication module 2013 may communicate with the microprocessor 2031 and components of the vehicle 2001 via a communication port. For example, the communication module 2013 transmits and receives data via the communication port 2033, to and from the drive unit 2002, the steering unit 2003, the accelerator pedal 2004, the brake pedal 2005, the shift lever 2006, the front wheels 2007, the rear wheels 2008, the axle 2009, the microprocessor 2031 and the memory (ROM, RAM) 2032 in the electronic control unit 2010, and sensors 2021-2029 provided in the vehicle 2001.

The communication module 2013 is a communication device that can be controlled by the microprocessor 2031 of the electronic control unit 2010 and that is capable of communicating with external devices. For example, various kinds of information are transmitted to and received from external devices through radio communication. The communication module 2013 may be internal to or external to the electronic control unit 2010. The external devices may include, for example, a base station, a mobile station, or the like.

The communication module 2013 may transmit at least one of the following to an external device via radio communication: signals from the various sensors 2021-2028 input to the electronic control unit 2010, information obtained based on these signals, and information based on inputs received externally (from the user) via the information service unit 2012. The electronic control unit 2010, various sensors 2021-2028, and the information service unit 2012, among others, may collectively be referred to as an input unit. For example, PUSCH transmitted by the communication module 2013 may include information based on the above inputs.

The communication module 2013 receives various types of information (traffic information, signal information, inter-vehicle information, etc.) transmitted from the external devices and displays the received information on the information service unit 2012 provided in the vehicle 2001. The information service unit 2012 may be referred to as an output unit that outputs information (e.g., outputs information to devices such as a display or speaker based on PDSCH received by the communication module 2013 or data/information decoded from the PDSCH). In addition, the communication module 2013 stores the various types of information received from the external devices in the memory 2032 available to the microprocessor 2031. Based on the information stored in the memory 2032, the microprocessor 2031 may control the drive unit 2002, the steering unit 2003, the accelerator pedal 2004, the brake pedal 2005, the shift lever 2006, the front wheels 2007, the rear wheels 2008, the axle 2009, the sensors 2021-2029, etc., mounted in the vehicle 2001.

### (Supplement to Embodiment)

As described above, the embodiment of the invention has been described, but the disclosed invention is not limited to the embodiment, and a person skilled in the art will understand various modification examples, correction examples, alternative examples, substitution examples, and the like. Specific numerical examples have been described in order to facilitate the understanding of the invention, but the numerical values are merely an example, and any appropriate values may be used, unless otherwise specified. The classification of the Clauses in the above description is not essential to the invention, and the listings described in two or more Clauses may be used by being combined, as necessary, or the listing described in one Clause may be applied to the listing described in another Clause (insofar as there is no contradiction). A boundary between the functional parts or the processing parts in the function block diagram does not necessarily correspond to a boundary between physical components. The operations of a plurality of functional parts may be physically performed by one component, or the operation of one functional part may be physically performed by a plurality of components. In a processing procedure described in the embodiment, a processing order may be changed, insofar as there is no contradiction. For the convenience of describing the processing, the base station 10 and the terminal 20 have been described by using a functional block diagram, but such an apparatus may be attained by hardware, software, or a combination thereof. Each of software that is operated by a processor of the base station 10 according to the embodiment of the invention and software that is operated by a processor of the terminal 20 according to the embodiment of the invention may be retained in a random access memory (RAM), a flash memory, a read only memory (ROM), an EPROM, an EEPROM, a register, a hard disk (HDD), a removable disk, a CD-ROM, a database, a server, and other suitable recording media.

In addition, the notification of the information is not limited to the aspect/embodiment described in this disclosure, and may be performed by using other methods. For example, the notification of the information may be implemented by physical layer signaling (for example, downlink control information (DCI) and uplink control information (UCI)), higher layer signaling (for example, radio resource control (RRC) signaling, medium access control (MAC) signaling, broadcast information (a master information block (MIB)), a system information block (SIB)), other signals, or a combination thereof. In addition, the RRC signaling may be referred to as an RRC message, and for example, may be an RRC connection setup message, an RRC connection reconfiguration message, and the like.

Each aspect/embodiments described in this disclosure may be applied to a system using long term evolution (LTE), LTE-advanced (LTE-A), SUPER 3G, IMT-advanced, a 4th generation mobile communication system (4G), a 5th generation mobile communication system (5G), 6th generation mobile communication system (6G),xth generation mobile communication system (xG) (xG, where x is, for example, an integer or a decimal), FRA (Future Radio Access),NR (New Radio), New Radio Access (NX), Future generation radio access (FX), W-CDMA (Registered Trademark), GSM (Registered Trademark), CDMA2000, an ultra mobile broadband (UMB), IEEE 802.11 (Wi-Fi (Registered Trademark)), IEEE 802.16 (WiMAX (Registered Trademark)), IEEE 802.20, an ultra-wideband (UWB), Bluetooth (Registered Trademark), and other suitable systems and a next-generation system that is expanded, modified, generated, or specified on the basis thereof. In addition, a combination of a plurality of systems (for example, a combination of at least one of LTE and LTE-A and 5G, and the like) may be applied.

In the processing procedure, the sequence, the flowchart, and the like of each aspect/embodiment described herein, the order may be changed, insofar as there is no contradiction. For example, in the method described in this disclosure, the elements of various steps are presented by using an exemplary order, but are not limited to the presented specific order.

Here, a specific operation that is performed by the base station 10 may be performed by an upper node, in accordance with a case. In a network provided with one or a plurality of network nodes including the base station 10, it is obvious that various operations that are performed in order for communication with respect to the terminal 20 can be performed by at least one of the base station 10 and network nodes other than the base station 10 (for example, MME, S-GW, or the like is considered as the network node, but the network node is not limited thereto). In the above description, a case is exemplified in which the number of network nodes other than the base station 10 is 1, but a plurality of other network nodes may be combined (for example, the MME and the S-GW).

The information, the signal, or the like described in this disclosure can be output to a lower layer (or the higher layer) from the higher layer (or the lower layer). The information, the signal, or the like may be input and output through a plurality of network nodes.

The information or the like that is input and output may be retained in a specific location (for example, a memory), or may be managed by using a management table. The information or the like that is input and output can be subjected to overwriting, updating, or editing. The information or the like that is output may be deleted. The information or the like that is input may be transmitted to the other apparatuses.

Judgment in this disclosure may be performed by a value represented by 1 bit (0 or 1), may be performed by a truth-value (Boolean: true or false), or may be performed by a numerical comparison (for example, a comparison with a predetermined value).

Regardless of whether the software is referred to as software, firmware, middleware, a microcode, and a hardware description language, or is referred to as other names, the software should be broadly interpreted to indicate a command, a command set, a code, a code segment, a program code, a program, a sub-program, a software module, an application, a software application, a software package, a routine, a sub-routine, an object, an executable file, an execution thread, a procedure, a function, and the like.

In addition, software, a command, information, and the like may be transmitted and received through a transmission medium. For example, in a case where the software is transmitted from a website, a server, or other remote sources by using at least one of a wire technology (a coaxial cable, an optical fiber cable, a twisted pair, a digital subscriber line (DSL), and the like) and a radio technology (an infrared ray, a microwave, and the like), at least one of the wire technology and the radio technology is included in the definition of the transmission medium.

The information, the signal, and the like described in this disclosure may be represented by using any of various different technologies. For example, the data, the command, the information, the signal, the bit, the symbol, the chip, and the like that can be referred to through the entire description described above may be represented by a voltage, a current, an electromagnetic wave, a magnetic field or magnetic particles, an optical field or a photon, or an arbitrary combination thereof.

Note that, the terms described in this disclosure and the terms necessary for understanding this disclosure may be replaced with terms having the same or similar meaning. For example, at least one of the channel and the symbol may be a signal (signaling). In addition, the signal may be a message. In addition, a component carrier (CC) may be referred to as a carrier frequency, a cell, a frequency carrier, and the like.

The terms "system" and "network" used in this disclosure are interchangeably used.

In addition, the information, the parameter, and the like described in this disclosure may be represented by using an absolute value, may be represented by using a relative value from a predetermined value, or may be represented by using another corresponding piece of information. For example, a radio resource may be indicated by an index.

The names used in the parameters described above are not a limited name in any respect. Further, expressions or the like using such parameters may be different from those explicitly disclosed in this disclosure. Various channels (for example, PUCCH, PDCCH, and the like) and information elements can be identified by any suitable name, and thus, various names that are allocated to such various channels and information elements are not a limited name in any respect.

In this disclosure, the terms "base station (BS)", "radio base station", "base station", "fixed station", "NodeB", "eNodeB (eNB)", "gNodeB (gNB)", "access point", "transmission point", "reception point", "transmission and reception point", "cell", "sector", "cell group", "carrier", "component carrier", and the like can be interchangeably used. The base station may be referred to by a term such as a macro-cell, a small cell, a femtocell, and a picocell.

The base station is capable of accommodating one or a plurality of (for example, three) cells. In a case where the base station accommodates a plurality of cells, the entire coverage area of the base station can be classified into a plurality of small areas, and each of the small areas is capable of providing communication service by a base station sub-system (for example, an indoor type small base station (a remote radio head (RRH)). The term "cell" or "sector" indicates a part of the coverage area or the entire coverage area of at least one of the base station and the base station sub-system that perform the communication service in the coverage.

In this disclosure, transmission of information from the base station to the terminal may be rephrased as the base station instructing the terminal to perform control or operations based on the information.

In this disclosure, the terms "mobile station (MS)", "user terminal", "user equipment (UE)", and "terminal" can be interchangeably used.

The mobile station may be referred to as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or other suitable terms, by a person skilled in the art.

At least one of the base station and the mobile station may be referred to as a transmitting apparatus, a receiving apparatus, a communication apparatus, and the like. Note that, at least one of the base station and the mobile station may be a device that is mounted on a mobile object, the mobile object itself, or the like. The mobile object is a movable object, and the moving speed is arbitrary. The moving object may be stopped. Examples of the moving object include, but are not limited to, vehicles, transportation vehicles, automobiles, motorcycles, bicycles, connected cars, excavators, bulldozers, wheel loaders, dump trucks, forklifts, trains, buses, rear cars, rickshaws, ships and other watercraft, airplanes, rockets, artificial satellites, drones, multicopters, quadcopters, balloons, and objects mounted thereon. Moreover, the mobile object may be an autonomous mobile object that operates based on operation commands. The mobile object may be a vehicle (for example, a car, an airplane, and the like), may be a mobile object that is moved in an unmanned state (for example, a drone, an autonomous driving car, and the like), or may be a (manned or unmanned) robot. Note that, at least one of the base station and the mobile station also includes an apparatus that is not necessarily moved at the time of a communication operation. For example, at least one of the base station and the mobile station may be an internet of things (IoT) device such as a sensor.

In addition, the base station in this disclosure may be replaced with the terminal. For example, each aspect/embodiment of this disclosure may be applied to a configuration in which communication between the base station and the user terminal is replaced with communication in a plurality of terminals 20 (for example, may be referred to as device-to-device (D2D), vehicle-to-everything (V2X), and the like). In this case, the function of the base station 10 described above may be provided in the terminal 20. In addition, the words "uplink", "downlink", and the like may be replaced with words corresponding to the communication between the terminals (for example, "side"). For example, an uplink channel, a downlink channel, and the like may be replaced with a side channel.

Similarly, the user terminal in this disclosure may be replaced with the base station. In this case, the function of the user terminal described above may be provided in the base station.

The terms "determining" used in this disclosure may involve diverse operations. "Determining", for example, may include deeming judging, calculating, computing, processing, deriving, investigating, looking up (search, inquiry) (for example, looking up in a table, a database, or another data structure), and ascertaining, as "determining". In addition, "determining" may include deeming receiving (for example, receiving information), transmitting (for example, transmitting information), input, output, and accessing (for example, accessing data in a memory), as "determining". In addition, "determining" may include deeming resolving, selecting, choosing, establishing, comparing, and the like as "determining". That is, "determining" may include deeming an operation as "determining". In addition, "determining" may be replaced with "assuming", "expecting", "considering", and the like.

The terms "connected" and "coupled", or any modification thereof indicate any direct or indirect connection or couple in two or more elements, and are capable of including a case where there are one or more intermediate elements between two elements that are "connected" or "coupled" to each other. The couple or connection between the elements may be physical or logical, or may be a combination thereof. For example, the "connection" may be replaced with "access". In the case of being used in this disclosure, it is possible to consider that two elements are "connected" or "coupled" to each other by using at least one of one or more electric wires, cables, and print electric connection, and as some non-limiting and non-inclusive examples, by using electromagnetic energy having a wavelength of a radio frequency domain, a microwave domain, and an optical (visible and invisible) domain, and the like.

The reference signal can also be abbreviated as RS, and may be referred to as pilot based on a standard to be applied.

The description "based on" that is used in this disclosure does not indicate only "based on only", unless otherwise specified. In other words, the description "based on" indicates both "based on only" and "based on at least".

Any reference to elements using the designations "first," "second," and the like, used in this disclosure, does not generally limit the amount or the order of such elements. Such designations can be used in this disclosure as a convenient method for discriminating two or more elements. Therefore, a reference to a first element and a second element does not indicate that only two elements can be adopted or the first element necessarily precedes the second element in any manner.

"Means" in the configuration of each of the apparatuses described above may be replaced with "unit", "circuit", "device", and the like.

In this disclosure, in a case where "include", "including", and the modification thereof are used, such terms are intended to be inclusive, as with the term "comprising". Further, the term "or" that is used in this disclosure is not intended to be exclusive-OR.

A radio frame may be configured of one or a plurality of frames in a time domain. Each of one or a plurality of frames in the time domain may be referred to as a subframe. The subframe may be further configured of one or a plurality of slots in the time domain. The subframe may be a fixed time length (for example, 1 ms) that does not depend on numerology.

The numerology may be a communication parameter to be applied to at least one of the transmission and the reception of a certain signal or channel. The numerology, for example, may indicate at least one of subcarrier spacing (SCS), a bandwidth, a symbol length, a cyclic prefix length, a transmission time interval (TTI), the number of symbols per TTI, a radio frame configuration, specific filtering processing that is performed by the transceiver in a frequency domain, specific windowing processing that is performed by the transceiver in a time domain, and the like.

The slot may be configured of one or a plurality of symbols (an orthogonal frequency division multiplexing (OFDM) symbol, a single carrier frequency division multiple access (SC-FDMA) symbol, and the like) in a time domain. The slot may be time unit based on the numerology.

The slot may include a plurality of mini slots. Each of the mini slots may be configured of one or a plurality of symbols in the time domain. In addition, the mini slot may be referred to as a subslot. The mini slot may be configured of symbols of which the number is less than that of the slot. PDSCH (or PUSCH) to be transmitted in time units greater than the mini slot may be referred to as a PDSCH (or PUSCH) mapping type A. PDSCH (or PUSCH) to be transmitted by using the mini slot may be referred to as a PDSCH (or PUSCH) mapping type B.

All of the radio frame, the subframe, the slot, the mini slot, and the symbol represent time units at the time of transmitting a signal. Other names respectively corresponding to the radio frame, the subframe, the slot, the mini slot, and the symbol may be used.

For example, one subframe may be referred to as a transmission time interval (TTI), a plurality of consecutive subframes may be referred to as TTI, or one slot or one mini slot may be referred to as TTI. That is, at least one of the subframe and TTI may be a subframe (1 ms) in the existing LTE, may be a period shorter than 1 ms (for example, 1 to 13 symbols), or may be a period longer than 1 ms. Note that, a unit representing TTI may be referred to as a slot, a mini slot, and the like, but not a subframe. Also, one slot may be referred to as a unit time. The unit time may differ for each cell according to the numerology.

Here, TTI, for example, indicates a minimum time unit of scheduling in radio communication. For example, in an LTE system, the base station performs scheduling for allocating a radio resource (a frequency bandwidth, transmission power, and the like that can be used in each of the terminals 20) in TTI units, with respect to each of the terminals 20. Note that, the definition of TTI is not limited thereto.

TTI may be a transmission time unit of a data packet (a transport block), a code block, a codeword, and the like that are subjected to channel coding, or may be processing unit of scheduling, link adaptation, and the like. Note that, when TTI is applied, a time section (for example, the number of symbols) in which the transport block, the code block, the codeword, and the like are actually mapped may be shorter than TTI.

Note that, in a case where one slot or one mini slot is referred to as TTI, one or more TTIs (that is, one or more slots or one or more mini slots) may be the minimum time unit of the scheduling. In addition, the number of slots (the number of mini slots) configuring the minimum time unit of the scheduling may be controlled.

TTI having a time length of 1 ms may be referred to as a normal TTI (TTI in LTE Rel.8-12), a normal TTI, a long TTI, a normal subframe, a normal subframe, a long subframe, a slot, and the like. TTI shorter than the normal TTI may be referred to as a shortened TTI, a short TTI, a partial TTI (or a fractional TTI), a shortened subframe, a short subframe, a mini slot, a subslot, a slot, and the like.

Note that, the long TTI (for example, the normal TTI, the subframe, and the like) may be replaced with TTI having a time length of greater than or equal to 1 ms, and the short TTI (for example, the shortened TTI and the like) may be replaced with TTI having a TTI length of less than a TTI length of the long TTI and greater than or equal to 1 ms.

The resource block (RB) is a resource allocation unit of the time domain and the frequency domain, and may include one or a plurality of consecutive subcarriers in the frequency domain. The number of subcarriers included in RB may be the same regardless of the numerology, or for example, may be 12. The number of subcarriers included in RB may be determined based on the numerology.

In addition, the time domain of RB may include one or a plurality of symbols, or may be the length of one slot, one mini slot, one subframe, or one TTI. One TTI, one subframe, and the like may be respectively configured of one or a plurality of resource blocks.

Note that, one or a plurality of RBs may be referred to as a physical resource block (physical RB: PRB), a sub-carrier group (SCG), a resource element group (REG), a PRB pair, an RB pair, and the like.

In addition, the resource block may be configured of one or a plurality of resource elements (RE). For example, one RE may be a radio resource domain of one subcarrier and one symbol.

A bandwidth part (BWP) (may be referred to as a part bandwidth or the like) may represent a subset of consecutive common resource blocks (common RBs) for certain numerology, in a certain carrier. Here, the common RB may be specified by an index of RB based on a common reference point of the carrier. PRB may be defined by a certain BWP, and may be numbered within BWP.

BWP may include BWP for UL (UL BWP) and BWP for DL (DL BWP). In UE, one or a plurality of BWPs may be configured within one carrier.

At least one of the configured BWPs may be active, and it need not be assumed that the UE transmits and receives a predetermined signal/channel out of the active BWP. Note that, the "cell", the "carrier", and the like in this disclosure may be replaced with "BWP".

The structure of the radio frame, the subframe, the slot, the mini slot, the symbol, and the like, described above, is merely an example. For example, the configuration of the number of subframes included in the radio frame, the number of slots per a subframe or a radio frame, the number of mini slots included in the slot, the number of symbols and RBs included in the slot or a mini slot, the number of subcarriers included in RB, the number of symbols in TTI, a symbol length, a cyclic prefix (CP) length, and the like can be variously changed.

In this disclosure, for example, in a case where articles such as a, an, and the are added by translation, this disclosure may include a case where nouns following the articles are plural.

In this disclosure, the term "A and B are different" may indicate "A and B are different from each other". Note that, the term may indicate "A and B are respectively different from C". The terms "separated", "coupled", and the like may be interpreted as with "being different".

Each aspect/embodiment described in this disclosure may be independently used, may be used by being combined, or may be used by being switched in accordance with execution. In addition, the notification of predetermined information (for example, the notification of "being X") is not limited to being performed explicitly, and may be performed implicitly (for example, the notification of the predetermined information is not performed).

As described above, this disclosure has been described in detail, but it is obvious for a person skilled in the art that this disclosure is not limited to the embodiment described in this disclosure. This disclosure can be implemented as corrected and modified without departing from the spirit and scope of this disclosure defined by the description of the claims. Therefore, the description in this disclosure is for illustrative purposes and does not have any limiting meaning with respect to this disclosure.

This patent application is based on and claims priority to Japanese Patent Application No. 2022-165894 filed on October 14, 2022, and the entire content of Japanese Patent Application No. 2022-165894 is incorporated herein by reference.

### Description of Symbols

10 base station
110 transmission unit
120 reception unit
130 configuration unit
140 control unit
20 terminal
210 transmission unit
220 reception unit
230 configuration unit
240 control unit
1001 processor
1002 storage device
1003 auxiliary storage device
1004 communication device
1005 input device
1006 output device
2001 vehicle
2002 drive unit
2003 steering unit
2004 accelerator pedal
2005 brake pedal
2006 shift lever
2007 front wheels
2008 rear wheels
2009 axle
2010 electronic control unit
2012 information service unit
2013 communication module
2021 current sensor
2022 revolution sensor
2023 pneumatic sensor
2024 vehicle speed sensor
2025 acceleration sensor
2026 brake pedal sensor
2027 shift lever sensor
2028 object detection sensor
2029 accelerator pedal sensor
2030 driving support system unit
2031 microprocessor
2032 memory (ROM, RAM)
2033 communication port (IO port)

## Claims

1. A terminal comprising:
a reception unit configured to receive, from a base station, a specific parameter indicated by an RRC message, in a transmission switching scheme in which at least one antenna port of a plurality of antenna ports can switch bands across two or more bands and the plurality of antenna ports in total switch bands for transmission across three or more bands; and
a control unit configured to assume presence or absence of configuration of UL MIMO of up to two ports in a band in which transmission switching is configured, based on whether the reception unit receives the specific parameter or not.

2. The terminal as claimed in claim 1, wherein the specific parameter is a parameter related to configuration of a transmission switching mode.

3. A terminal comprising:
a reception unit configured to receive, from a base station, a specific parameter notified by an RRC message, in a transmission switching scheme in which at least one antenna port of a plurality of antenna ports can switch bands across two or more bands and the plurality of antenna ports in total switch bands for transmission across three or more bands; and
a control unit configured to assume that the reception unit does not receive the specific parameter, assume that the reception unit always receives the specific parameter, or ignore the specific parameter.

4. The terminal as claimed in claim 3, wherein the control unit determines which serving cell can perform transmission with up to two ports based on configuration in each serving cell, regardless of the specific parameter.

5. A base station comprising:
a transmission unit configured to transmit, to a terminal, a specific parameter by an RRC message, in a transmission switching scheme in which at least one antenna port of a plurality of antenna ports can switch bands across two or more bands and the plurality of antenna ports in total switch bands for transmission across three or more bands; and
a control unit configured to assume presence or absence of configuration of UL MIMO of up to two ports in a band in which transmission switching is configured in the terminal based on whether the transmission unit transmits the specific parameter or not.

6. A communication method executed by a terminal, the communication method comprising:
monitoring a specific parameter indicated by an RRC message, in a transmission switching scheme in which at least one antenna port of a plurality of antenna ports can switch bands across two or more bands and the plurality of antenna ports in total switch bands for transmission across three or more bands; and
assuming presence or absence of configuration of UL MIMO of up to two ports in a band in which transmission switching is configured, based on whether the terminal receives the specific parameter or not.
